# EUROPEAN PATENT APPLICATION

(11) **EP 4 835 485 A1**
(43) Date of publication of application: **04.11.2026**
(21) Application number: 24911562.7
(22) Date of filing: 27.12.2024
(51) Int. Cl.: G01N 35/04, G01N 30/32

(54) **SAMPLE ANALYSIS SYSTEM, LIQUID CHROMATOGRAPHY DEVICE, AND CONTROL METHOD FOR LIQUID CHROMATOGRAPHY DEVICE**

(30) Priority: 29.12.2023 CN 202311873111
(71) Applicant: Shenzhen Mindray Bio-Medical Electronics Co., Ltd., Shenzhen, Guangdong 518057 (CN)
(72) Inventor: LIU, Hai, Shenzhen, Guangdong 518057 (CN); WANG, Dongqiang, Shenzhen, Guangdong 518057 (CN); CHEN, Jiajun, Shenzhen, Guangdong 518057 (CN)
(74) Representative: KIPA AB
(86) International application number: PCT/CN2024/143432
(87) International publication number: WO 2025/140646

(57) **Abstract**

Provided are a sample analysis system (10), a liquid chromatography device, and a control method for the liquid chromatography device. The sample analysis system (10) comprises a liquid chromatography analyzer (100), a hematology analyzer (200), a sample transfer apparatus (300), and a control assembly (500). The liquid chromatography analyzer (100) comprises a sample supply assembly (110), a liquid-phase fluid supply assembly (120), a reversing valve (130), a reagent preparation channel (140), a chromatographic column (150), and a detector (160). The liquid-phase fluid supply assembly (120) comprises a first driving device (121), an energy storage device (122), and a locking/releasing device (123). The control assembly (500) is configured to: within a first preset period after a chromatographic analysis project on a blood sample is completed, if no information about other blood samples requiring to undergo the chromatographic analysis project is received, control the locking/releasing device (123) to switch to a locked state so as to prevent a potential energy storage and release assembly (1222) from releasing stored potential energy. The present invention solves the technical problems of low liquid-phase fluid utilization efficiency and low detection speed of the liquid chromatography device in an intermittent sample loading scenario.

## Description

### TECHNICAL FIELD

The disclosure relates to the field of in-vitro diagnostic devices, and in particular to a sample analysis system, a liquid chromatography device, and a control method for a liquid chromatography device.

### BACKGROUND

A normal operation process of a liquid chromatography analyzer in the related art includes driving a liquid-phase fluid by means of a driving device until its pressure reaches a target pressure value or a target pressure range to achieve pressure buildup, then performing a chromatographic analysis test, and after completion of the chromatographic analysis test, if no sample requires a chromatographic analysis test, stopping driving the driving device to achieve pressure relief.

When the aforementioned liquid chromatography analyzer is used in a scenario requiring frequent and intermittent sample injections, a liquid path system needs frequent and repeated performances of pressure buildup, chromatographic analysis and pressure relief, leading to the following problems in practical applications of the liquid chromatography analyzer: (1) frequent pressure buildup and pressure relief results in loss of a liquid-phase fluid and consequently low utilization efficiency of the liquid-phase fluid; and (2) the pressure buildup process is time-consuming and requires repeated pressure buildup, resulting in a relatively low detection speed during the intermittent sample injection scenario, making it difficult for the liquid chromatography analyzer to achieve interconnected use with a further analyzer used to perform another analysis test, because when the liquid chromatography analyzer is interconnected with the further analyzer, samples will be stranded on a track during the pressure buildup process, blocking a sample transfer channel of the further analyzer and consequently reducing the sample testing efficiency. On this basis, the liquid chromatography analyzer typically operates in a standalone mode, and it is recommended that an operator performs centralized sample injection on the standalone liquid chromatography analyzer to reduce the pressure buildup and pressure relief processes. However, this results in prolonged time to issue chromatographic analysis test reports for some samples, easily causing patient dissatisfaction.

### SUMMARY

A first object of the disclosure is to provide a sample analysis system, which aims to solve the technical problem of a liquid chromatography analyzer in the related art having low liquid-phase fluid utilization efficiency and low detection speed when used in an intermittent sample injection scenario.

In order to achieve the above object, the disclosure provides the following solution: a sample analysis system, including:
a sample input apparatus configured at least to receive a sample container loaded with a blood sample, so as to load the blood sample;
a liquid chromatography analyzer configured to aspirate the blood sample from the sample container and to perform chromatographic analysis on at least part of the aspirated blood sample;
a hematology analyzer configured to aspirate the blood sample from the sample container and to perform hematology analysis on at least part of the aspirated blood sample;
a sample transfer apparatus including a first transfer track and a second transfer track, the first transfer track being configured to transfer the sample container from the sample input apparatus to the liquid chromatography analyzer, the second transfer track being configured to transfer the sample container from the sample input apparatus to the hematology analyzer, and the first transfer track and the second transfer track being integrally formed or connected to each other;
an information acquisition apparatus configured to acquire information indicative of a type of test for the blood sample in the sample container; and
a control assembly configured to: determine the type of test for the blood sample in the sample container based on the information fed back by the information acquisition apparatus indicative of the type of test for the blood sample in the sample container; and control, based on the type of test for the blood sample in the sample container, the sample transfer apparatus to transfer the sample container to the liquid chromatography analyzer and/or the hematology analyzer for sample aspiration;
where the liquid chromatography analyzer includes a sample supply assembly, a liquid-phase fluid supply assembly, a directional control valve, a sample solution preparation channel, a chromatographic column, and a detector, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
the sample supply assembly is configured to aspirate the blood sample from the sample container and supply a sample solution prepared from the at least part of the aspirated blood sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device including a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device exerts an acting force to the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the liquid-phase fluid to store potential energy and, when the locking/releasing device removes the acting force exerted on the potential energy storage and release assembly, the potential energy storage and release assembly is released, thereby allowing the potential energy storage and release assembly to move relative to the housing so as to allow the potential energy storage and release assembly to release the stored potential energy; and
the control assembly is further configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a blood sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

A second object of the disclosure is to provide a sample analysis system. The sample analysis system includes:
a sample input apparatus configured at least to receive a sample container loaded with a blood sample, so as to load the blood sample;
a liquid chromatography analyzer configured to aspirate the blood sample from the sample container and to perform chromatographic analysis on at least part of the aspirated blood sample;
a hematology analyzer configured to aspirate the blood sample from the sample container and to perform hematology analysis on at least part of the aspirated blood sample;
a sample transfer apparatus including a first transfer track and a second transfer track, the first transfer track being configured to transfer the sample container from the sample input apparatus to the liquid chromatography analyzer, the second transfer track being configured to transfer the sample container from the sample input apparatus to the hematology analyzer, and the first transfer track and the second transfer track being integrally formed or connected to each other;
an information acquisition apparatus configured to acquire information indicative of a type of test for the blood sample in the sample container; and
a control assembly configured to: determine the type of test for the blood sample in the sample container based on the information fed back by the information acquisition apparatus indicative of the type of test for the blood sample in the sample container; and control, based on the type of test for the blood sample in the sample container, the sample transfer apparatus to transfer the sample container to the liquid chromatography analyzer and/or the hematology analyzer for sample aspiration;
where the liquid chromatography analyzer includes a sample supply assembly, a liquid-phase fluid supply assembly, a directional control valve, a sample solution preparation channel, a chromatographic column, and a detector, the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another, the chromatographic column being connected between the directional control valve and the detector;
the sample supply assembly is configured to aspirate the blood sample from the sample container and supply a sample solution prepared from the at least part of the aspirated blood sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, the energy storage device including a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy, and the locking/releasing device being switchable between a locked state and a released state;
the control assembly is further configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and
when the locking/releasing device is in the locked state and the directional control valve is in the first communication state, if information indicating that a chromatographic analysis test is required for a blood sample is received, control the sample supply assembly to following sample solution preparation operation: aspirating a blood sample from the sample container and dispensing the blood sample to a first reaction container, and delivering a sample solution prepared from at least the blood sample and a hemolytic agent in the first reaction container to the sample preparation channel via the directional control valve;
during performance of the sample solution preparation operation by the sample supply assembly, control the first driving device to be activated and operate, and control the locking/releasing device to switch from the locked state to the released state, such that the potential energy storage and release assembly moves relative to the housing to release the stored potential energy, so as to assist in driving the liquid-phase fluid to flow toward the directional control valve and the chromatographic column; and
after completion of the sample solution preparation operation by the sample supply assembly, control the directional control valve to switch from the first communication state to the second communication state, such that the liquid-phase fluid supply assembly drives the sample solution in the sample solution preparation channel to be delivered to the chromatographic column by means of the liquid-phase fluid.

A third object of the disclosure is to provide a liquid chromatography device. The liquid chromatography device includes a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to analyze the test solution flowing out of the chromatographic column;
the liquid-phase fluid supply assembly includes a first driving device and an energy storage device, the first driving device being configured to drive the liquid-phase fluid to flow toward the directional control valve and the chromatographic column, and the energy storage device being disposed between the first driving device and the directional control valve and configured to store potential energy or release the stored potential energy; and
the first controller is configured to: during performance of a chromatographic analysis test for a sample, control the first driving device to drive the liquid-phase fluid to flow so as to elute the sample solution adsorbed on the chromatographic column, and control the energy storage device to store potential energy under the pressure of the liquid-phase fluid; and after completion of the chromatographic analysis test for the sample and before performance of a chromatographic analysis for a next sample, control the energy storage device to release the potential energy stored during performance of the chromatographic analysis test for a sample, so as to assist in driving the liquid-phase fluid to flow toward the directional control valve and the chromatographic column.

A fourth object of the disclosure is to provide a liquid chromatography device. The liquid chromatography device includes a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device including a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device abuts against the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the liquid-phase fluid to store potential energy and, when the locking/releasing device is disengaged from the potential energy storage and release assembly, the potential energy storage and release assembly is released, thereby allowing the potential energy storage and release assembly to move relative to the housing so as to allow the potential energy storage and release assembly to release the stored potential energy; and
the first controller is configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within the first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

A fifth object of the disclosure is to provide a liquid chromatography device. The liquid chromatography device includes a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device including a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device locks the potential energy storage and release assembly in a non-liquid-path-locking manner so as to prevent the potential energy storage and release assembly from moving relative to the housing and thus prevent the potential energy storage and release assembly from releasing the stored potential energy, and a released state in which the potential energy storage and release assembly is capable of moving relative to the housing under the pressure of the liquid-phase fluid to store potential energy, and the locking/releasing device releases the potential energy storage and release assembly in a non-liquid-path-conducting manner to allow the potential energy storage and release assembly to release the stored potential energy;
the first controller is configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within the first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

A sixth object of the disclosure is to provide a liquid chromatography device. The liquid chromatography device includes a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device including a housing and a potential energy storage and release assembly that is at least partially disposed within the housing and that partitions an interior of the housing to form a liquid chamber through which the liquid-phase fluid flows, the housing being formed with a liquid inlet for the liquid-phase fluid to flow into the liquid chamber and a liquid outlet for the liquid-phase fluid to flow out of the liquid chamber, and the potential energy storage and release assembly being at least partially movable relative to the housing to change a volume of the liquid chamber and to store potential energy or release the stored potential energy;
the locking/releasing device is switchable between a locked state in which the locking/releasing device prevents the potential energy storage and release assembly from releasing the stored potential energy, and a released state in which the locking/releasing device allows the potential energy storage and release assembly to store potential energy and release the stored potential energy; and
the first controller is configured to: during performance of a chromatographic analysis test, control the first driving device to drive the liquid-phase fluid to flow at a target pressure value or at a pressure value within a target pressure range, so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow to maintain a pressure of the liquid-phase fluid at the liquid outlet at a first pressure value; and when the locking/releasing device is in the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column;
where the first pressure value is substantially equal to the target pressure value or is within the target pressure range, or the first pressure value is substantially equal to zero.

A seventh object of the disclosure is to provide a liquid chromatography device. The liquid chromatography device includes a sample supply assembly, a liquid-phase fluid supply assembly, a directional control valve, a sample solution preparation channel, a chromatographic column, a detector, and a first controller, the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another, the chromatographic column being connected between the directional control valve and the detector;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, a second driving device, and an energy storage device, the first driving device being connected between the liquid-phase fluid container and the energy storage device, the first driving device being configured to drive the liquid-phase fluid to flow toward the directional control valve and the chromatographic column, the energy storage device being configured to store potential energy when the first driving device drives the liquid-phase fluid to flow, the second driving device being connected to the liquid-phase fluid container and/or the energy storage device, and the second driving device being configured to aspirate the liquid-phase fluid for storage and to use the stored liquid-phase fluid to assist in driving the liquid-phase fluid to flow toward the directional control valve and the chromatographic column; and
the first controller is configured to: during performance of a chromatographic analysis test, control the first driving device to drive the liquid-phase fluid to flow so as to elute the sample solution adsorbed on the chromatographic column; within the first preset period after completion of the chromatographic analysis test for a sample, if no information indicating that a chromatographic analysis test is required for another sample is received, control the second driving device to be activated and operate to aspirate the liquid-phase fluid and store the liquid-phase fluid in the second driving device, and control the first driving device to stop driving the liquid-phase fluid to flow; and after the second driving device stores the liquid-phase fluid, if information indicating that a chromatographic analysis test is required for a sample is received, control the first driving device to be activated and operate to drive the liquid-phase fluid to flow toward the directional control valve and the chromatographic column, and control the second driving device to be activated and operate to assist in driving the liquid-phase fluid to flow toward the directional control valve and the chromatographic column by means of the stored liquid-phase fluid.

An eighth object of the disclosure is to provide a liquid chromatography device. The liquid chromatography device includes a sample supply assembly, a liquid-phase fluid supply assembly, a directional control valve, a sample solution preparation channel, a chromatographic column, and a detector, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
where the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly includes a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device including a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device exerts an acting force on the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the fluid to store potential energy and, when the locking/releasing device removes the acting force exerted on the potential energy storage and release assembly, the potential energy storage and release assembly is released, thereby allowing the potential energy storage and release assembly to move relative to the housing to allow the potential energy storage and release assembly to release the stored potential energy.

A ninth object of the disclosure is to provide a sample analysis system. The sample analysis system includes:
a sample input apparatus configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus including a first transfer track and a second transfer track, the first transfer track being configured to transfer the sample container from the sample input apparatus to the liquid chromatography device, the second transfer track being configured to transfer the sample container from the sample input apparatus to the cell analyzer, and the first transfer track and the second transfer track being integrally formed or connected to each other; and
a control assembly configured to: control, based on the type of test for the sample in the sample container, the sample transfer apparatus to transfer the sample container to the first analyzer and/or the second analyzer for sample aspiration.

A tenth object of the disclosure is to provide a control method for a liquid chromatography device. The control method includes the steps of:
within a first preset period after completion of a chromatographic analysis test for one blood sample, if no information indicating that a chromatographic analysis test is required for another blood sample is received, controlling a locking/releasing device to switch from a released state to a locked state so as to prevent a potential energy storage and release assembly from releasing the stored potential energy, and controlling a first driving device to stop driving a liquid-phase fluid to flow; and
after the locking/releasing device switches to the locked state, if information indicating that a chromatographic analysis test is required for a blood sample is received, controlling the locking/releasing device to switch from the locked state to the released state, such that the potential energy storage and release assembly releases the stored potential energy so as to assist in driving the liquid-phase fluid to flow toward a chromatographic column.

As an implementation, the control method further includes: before performance of a first chromatographic analysis test after startup of the liquid chromatography analyzer, control the first driving device to be activated and operate for a third preset period to cause the pressure of the liquid-phase fluid flowing toward the chromatographic column to reach the target pressure value or the target pressure range; and during performance of a chromatographic analysis test, control the first driving device to drive the liquid-phase fluid to flow at the target pressure value or at a pressure value within the target pressure range, so as to elute the sample solution adsorbed on the chromatographic column; and
if information indicating that a chromatographic analysis test is required for a blood sample is received, controlling the locking/releasing device to switch from the locked state to the released state includes: controlling the first driving device to be activated and operate for a second preset period to cause a pressure of the liquid-phase fluid flowing toward the chromatographic column to be greater than zero and less than the target pressure value or less than a lower limit value of the target pressure range, and then controlling the locking/releasing device to switch from the locked state to the released state; and
the control method further including: after the locking/releasing device is controlled to switch from the locked state to the released state, controlling the first driving device to continue to operate for a fourth preset period to cause the pressure of the liquid-phase fluid flowing toward the chromatographic column substantially to reach the target pressure value or the target pressure range, and then controlling the directional control valve to switch to a state in which the liquid-phase fluid supply assembly, the sample solution preparation channel and the chromatographic column are in communication with one another, such that the liquid-phase fluid supply assembly drives the sample solution in the sample solution preparation channel to be delivered to the chromatographic column by means of the liquid-phase fluid;
where a sum of the second preset period and the fourth preset period is less than the third preset period.

An eleventh object of the disclosure is to provide a control method for a liquid chromatography device. The control method includes the steps of:
during performance of a chromatographic analysis test for a sample, controlling a first driving device to drive a liquid-phase fluid to flow so as to elute a sample solution adsorbed on the chromatographic column and prepared from at least the sample, and controlling an energy storage device to store potential energy under a pressure of the liquid-phase fluid; and
after completion of the chromatographic analysis test for the sample and before performance of a chromatographic analysis for a next sample, control the energy storage device to release the potential energy stored during performance of the chromatographic analysis test for the sample, so as to assist in driving the liquid-phase fluid to flow toward the directional control valve and the chromatographic column.

The disclosure provides a sample analysis system, a liquid chromatography device, and a control method for a liquid chromatography device. An energy storage device and a locking/releasing device are provided in a liquid-phase fluid supply assembly. The locking/releasing device is configured to release a potential energy storage and release assembly of the energy storage device when in a released state to allow the energy storage device to store potential energy and release potential energy under the pressure of the liquid-phase fluid, and the locking/releasing device is configured to lock the potential energy storage and release assembly when in a locked state so as to prevent the energy storage device from releasing the stored potential energy, such that the liquid-phase fluid supply assembly has the function of storing potential energy and releasing potential energy, in addition to the function of supplying the liquid-phase fluid at a certain pressure. Utilizing the potential energy stored in the energy storage device can reduce energy loss in an intermittent sample injection scenario, and utilizing the potential energy released by the energy storage device can assist in rapid pressure buildup of the liquid-phase fluid, so as to accelerate the pressure re-buildup in the intermittent sample injection scenario. Specifically, in the disclosure, within a first preset period after completion of a chromatographic analysis test for one blood sample, if no information indicating that a chromatographic analysis test is required for another blood sample is received, the locking/releasing device is controlled to lock the potential energy storage and release assembly, so as to prevent the potential energy storage and release assembly from releasing the stored potential energy, and a first driving assembly of the liquid-phase fluid supply assembly is controlled to stop operating. When information indicating that a chromatographic analysis test is required for a blood sample is received again, the locking/releasing device is controlled to release the potential energy storage and release assembly, such that the potential energy storage and release assembly releases the stored potential energy to assist in driving the liquid-phase fluid to flow toward the directional control valve and the chromatographic column. In this way, energy loss can be reduced by means of the potential energy stored in the energy storage device, and the pressure re-buildup can be accelerated by means of the potential energy released by the energy storage device. Applying the solutions of the disclosure to an intermittent sample injection scenario can solve the problem of intermittently injected samples having to wait for a long pressure buildup period before entering a liquid chromatography analyzer for analysis such that test reports can be rapidly issued for each chromatographic analysis test, and when the liquid chromatography analyzer is interconnected with a further analyzer, can prevent the liquid chromatography analyzer from experiencing sample congestion in the transfer track due to prolonged period of sample queuing in the liquid chromatography analyzer and thus affecting sample transfer to the further analyzers, thereby fully ensuring the sample testing efficiency in an interconnected mode. In addition, when the locking/releasing device locks the potential energy storage and release assembly, since a first driving device in the liquid-phase fluid supply assembly for driving the liquid-phase fluid to flow is in a stopped state, it is possible to avoid the overcurrent of loss and waste of the liquid-phase fluid caused by the continuous operation of the first driving device when there is no sample to be tested.

### BRIEF DESCRIPTION OF THE DRAWINGS

In order to more clearly describe the technical solutions in the embodiments of the disclosure or in the prior art, the drawings required for describing the embodiments or the prior art will be briefly described below. Apparently, the drawings in the following description show only some of the embodiments of the disclosure, and those of ordinary skill in the art may still derive other drawings based on structures illustrated in these drawings without creative efforts.
FIG. 1 is a schematic structural diagram of a sample analysis system according to a first example of the disclosure;
FIG. 2 is a schematic diagram showing the components of the sample analysis system according to the first example of the disclosure;
FIG. 3 is a schematic diagram showing a liquid path of the liquid chromatography analyzer according to the first example of the disclosure with a directional control valve in a first communication state;
FIG. 4 is a schematic diagram showing a liquid path of the liquid chromatography analyzer according to the first example of the disclosure with the directional control valve in a second communication state;
FIG. 5 is a schematic cross-sectional view of an energy storage device and a locking/releasing device in an initial state according to the first example of the disclosure;
FIG. 6 is a schematic cross-sectional view of the energy storage device and the locking/releasing device according to the first example of the disclosure during performance of a chromatographic analysis test;
FIG. 7 is a schematic cross-sectional view of the energy storage device locked by the locking/releasing device according to the first example of the disclosure;
FIG. 8 is a schematic diagram of an external structure of the energy storage device according to the first example of the disclosure;
FIG. 9 is a schematic cross-sectional view of the energy storage device according to the first example of the disclosure;
FIG. 10 is a schematic perspective view of the liquid chromatography analyzer according to the first example of the disclosure;
FIG. 11 is a schematic structural diagram of a liquid chromatography-mass spectrometry analyzer according to the first example of the disclosure;
FIG. 12 is a schematic diagram of a liquid path of a liquid chromatography analyzer according to a sixth example of the disclosure with a directional control valve in a first communication state; and
FIG. 13 is a schematic diagram of a liquid path of a liquid chromatography analyzer according to a seventh example of the disclosure with a directional control valve in a first communication state.

List of reference signs: 10. Sample analysis system; 100. Liquid chromatography analyzer; 110. Sample supply assembly; 111. Sampling component; 112. First reaction container; 113. Sample delivery liquid path; 120. Liquid-phase fluid supply assembly; 121. First driving device; 122. Energy storage device; 1221. Housing; 1221a. Liquid inlet; 1221b. Liquid outlet; 1222. Potential energy storage and release assembly; 1222a. Diaphragm; 1222b. Elastic element; 1222c. Guide rod; 1222d. Engagement portion; 1223. Liquid chamber; 123. Locking/releasing device; 1231. Power component; 1232. Locking component; 1232a. Locking portion; 1233. Transmission component; 1234. Detection component; 1235. Two-way valve; 124. Third driving device; 125. Mixing component; 126. Second driving device; 130. Directional control valve; 140. Sample solution preparation channel; 150. Chromatographic column; 160. Detector; 170. Display screen assembly; 180. Casing assembly; 190. Waste liquid channel; 101. Liquid chromatography-mass spectrometry analyzer; 1010. Chromatography device; 1011. Pretreatment device; 1011a. Magnetic separation component; 1011b. Magnetic bead elution component; 1011c. Reagent storage component; 1011d. Reagent dispensing component; 1011e. Pipetting component; 1011f. Reaction container supply component; 1012. Sample storage device; 200. Hematology analyzer; 300. Sample transfer apparatus; 310. First transfer track; 320. Second transfer track; 400. Sample input apparatus; 500. Control assembly; 600. Information acquisition apparatus; 20. First fluid container; 30. Second fluid container; 40. Hemolytic agent container.

### DESCRIPTION OF THE PREFERRED EMBODIMENTS

The technical solutions of the embodiments of the disclosure will be described below clearly and comprehensively with reference to the accompanying drawings of the embodiments of the disclosure. Apparently, the embodiments described are merely some of, rather than all of, the embodiments of the disclosure. Based on the embodiments of the disclosure, all the other embodiments that would have been obtained by those of ordinary skill in the art without any creative efforts shall fall within the scope of protection of the disclosure.

In addition, the technical solutions among various embodiments can be combined with each other, which, however, must be based on that it can be realized by those of ordinary skill in the art. When a combination of the technical solutions is contradictory or cannot be realized, it should be considered that the combination of the technical solutions does not exist, nor is it within the scope of protection required by the disclosure.

The solutions according to the embodiments of the disclosure are applicable to either a scenario of continuous sample injection (i.e., samples being continuously injected in a centralized manner) of a liquid chromatography device, or a scenario of intermittent sample injection (i.e., samples being not continuously injected in a centralized manner) of a liquid chromatography device, so as to solve the problems that frequent pressure buildup and pressure relief of the liquid chromatography device in the intermittent injection scenario cause loss and low utilization efficiency of a liquid-phase fluid and that a long pressure buildup process results in a slow detection speed and prevents it from being interconnected with other analyzers. The liquid chromatography device performs elution and testing on samples by means of liquid chromatography. Liquid chromatography refers to performing separation and elution based on difference in affinity capacities, such as partition coefficients and adsorption capacities, of various components in a sample between a liquid phase and a solid phase. Due to differences in the properties and structures of the components, the magnitude and strength of the acting forces generated between the components and the stationary phase vary. As the mobile phase moves, the mixture undergoes repeated partition equilibration between the two phases, resulting in different retention periods of the components by the stationary phase, such that the components successively flow out of the stationary phase in a certain order.

The liquid chromatography device according to the embodiments of the disclosure may be a glycated hemoglobin analyzer, or may be other devices employing liquid chromatography, such as a liquid chromatography and mass spectrometry combined device or a device for testing a urine sample or other non-blood samples by means of liquid chromatography. The glycated hemoglobin analyzer according to the embodiments of the disclosure performs testing on glycated hemoglobin by means of liquid chromatography. Since there are few samples that require a glycated hemoglobin analysis test in practical applications, glycated hemoglobin analyzers generally need intermittent sample injection. Applying the solutions of the embodiments of the disclosure to the glycated hemoglobin analyzer facilitates the interconnected use of the glycated hemoglobin analyzer with other analyzers, such as being interconnected into a cascade system or a laboratory automation line.

### First example:

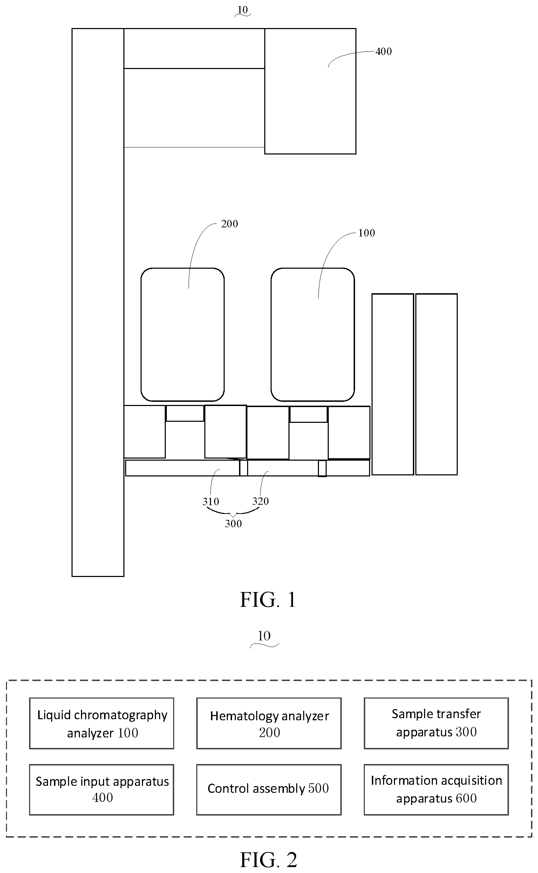

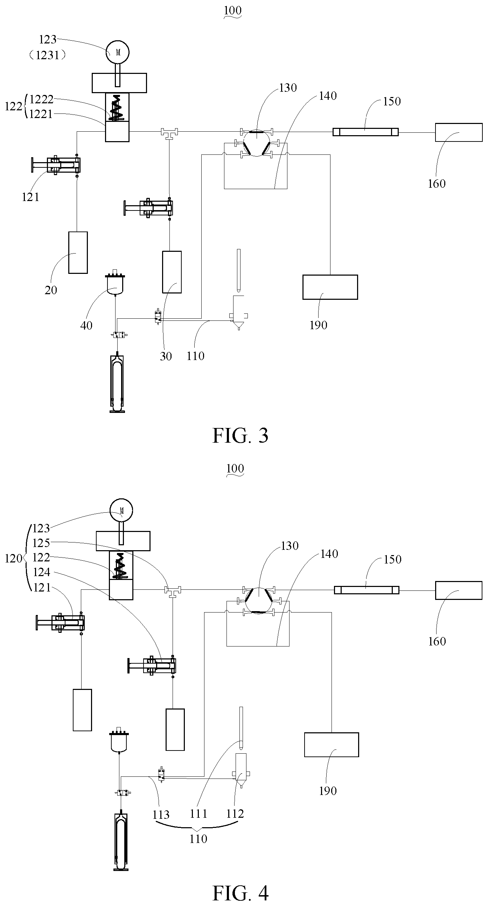

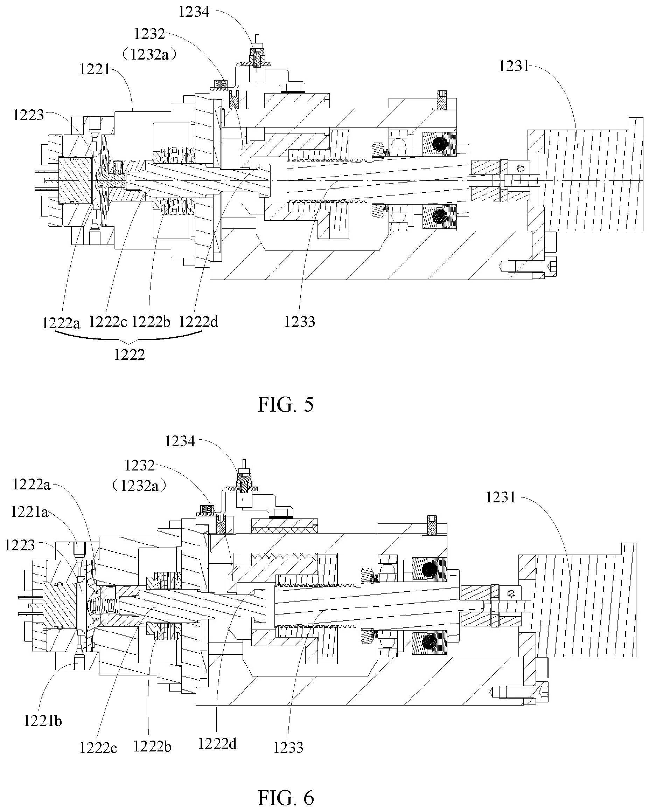

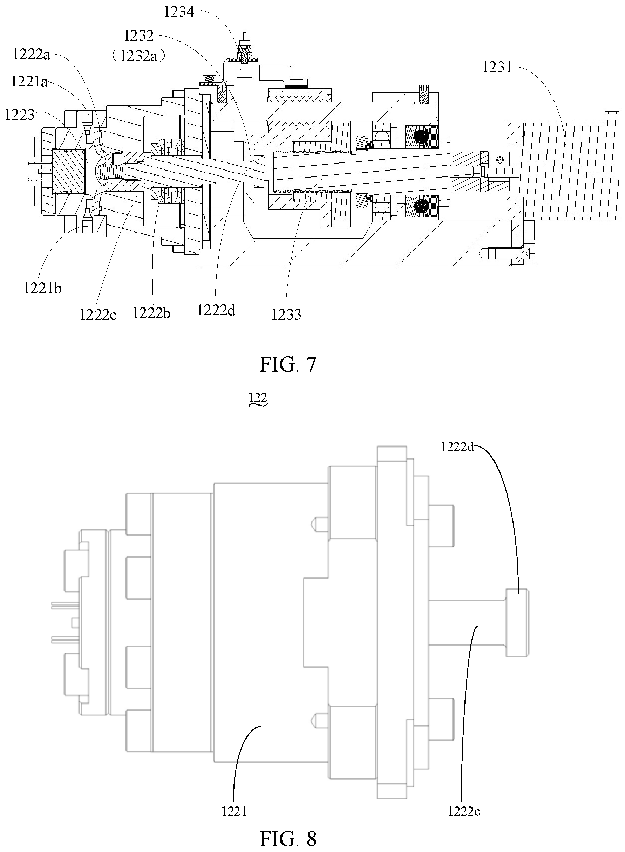

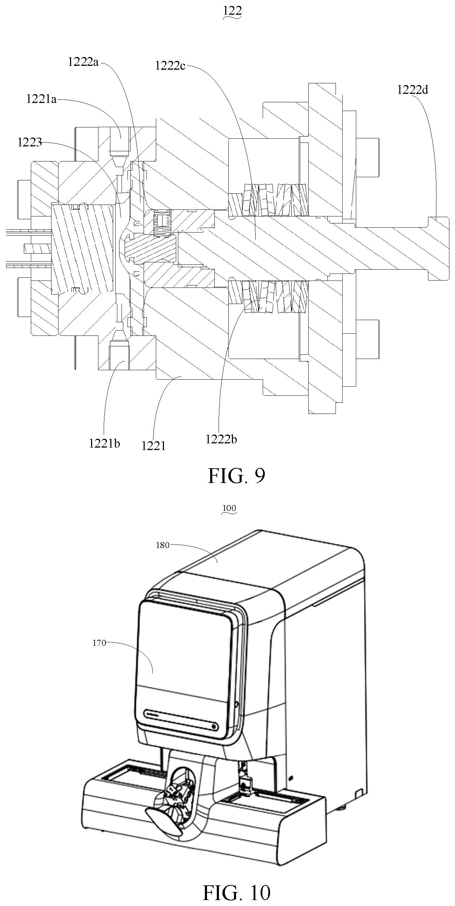

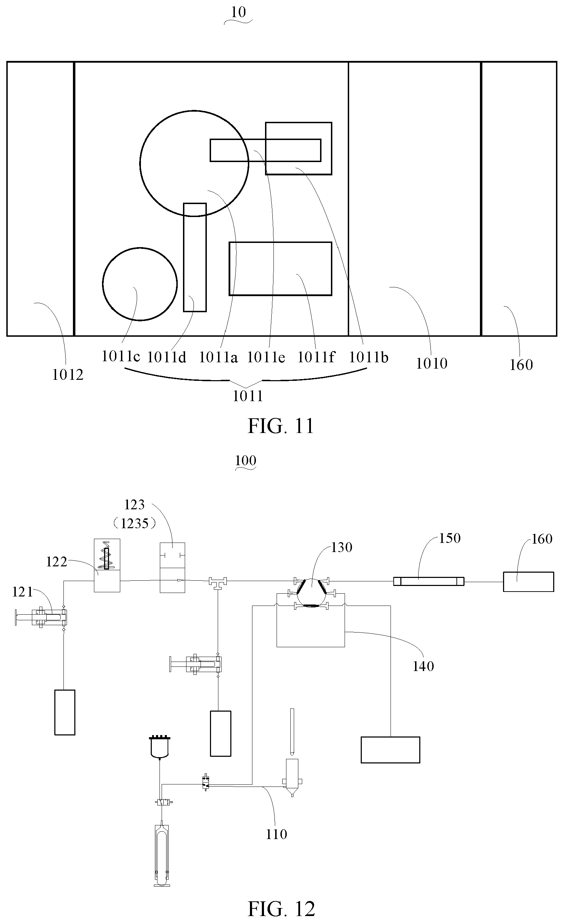

As shown in FIGS. 1 to 11, a sample analysis system 10 according to the first example of the disclosure includes a sample input apparatus 400, a first analyzer, a second analyzer, a sample transfer apparatus 300, and a control assembly 500. The sample analysis system 10 is a sample analysis cascade system or a sample analysis laboratory automation line for interconnecting at least two analyzers. The sample input apparatus 400 is configured at least to receive a sample container loaded with a sample, so as to load the sample. The sample container is used for loading a sample collected from a patient. The first analyzer is configured to aspirate the sample from the sample container and to perform a first analysis test on at least part of the aspirated sample. The second analyzer is configured to aspirate the sample from the sample container and to perform a second analysis test on at least part of the aspirated sample. The sample transfer apparatus 300 is configured to transfer the sample container from the sample input apparatus 400 to the first analyzer and/or the second analyzer. The control assembly 500 is configured to control the sample transfer apparatus 300 to transfer the sample container to the first analyzer and/or the second analyzer.

As an implementation, the aforementioned sample is a sample collected from a human body or an animal body, that is, the sample is a human sample or an animal sample.

As an implementation, the aforementioned sample is a blood sample, and the sample input apparatus 400 is configured at least to receive a sample container loaded with the blood sample, so as to load the blood sample. That is, the sample analysis system 10 in this embodiment is a cascade system or a laboratory automation line for analyzing the blood sample. Of course, in specific applications, the sample is not limited to a blood sample, and may also be, for example, a urine sample or other body fluid samples.

As an implementation, the first analyzer is a liquid chromatography device, that is, the first analysis test is a chromatography elution analysis test. The liquid chromatography device is configured to aspirate the sample from the sample container and to perform chromatographic elution and analysis on at least part of the aspirated sample. In this embodiment, the liquid chromatography device may be interconnected with a further analyzer without affecting the testing efficiency of the further analyzer.

As an implementation, the liquid chromatography device may be either a liquid chromatography analyzer 100, or a liquid chromatography-mass spectrometry analyzer 101. The liquid chromatography analyzer 100 includes an ultraviolet detector 160 or a fluorescence detector 160 as a detector 160; and the liquid chromatography-mass spectrometry analyzer 101 includes a mass spectrometer detector 160 as a detector 160.

As an implementation, the first analyzer is the liquid chromatography analyzer 100, that is, the first analysis test is a chromatographic analysis test. The liquid chromatography analyzer 100 is configured to aspirate the sample from the sample container and to perform chromatographic analysis on at least part of the aspirated sample. In this embodiment, the liquid chromatography analyzer 100 may be interconnected with a further analyzer without affecting the testing efficiency of the further analyzer.

As an implementation, the liquid chromatography analyzer 100 is configured to aspirate a blood sample from the sample container and to perform chromatographic analysis on at least part of the aspirated blood sample. Of course, in practical applications, the liquid chromatography analyzer 100 is not limited to performing chromatographic analysis on a blood sample. For example, the liquid chromatography analyzer 100 may also be used to perform chromatographic analysis on a urine sample or other samples. That is, the liquid chromatography analyzer 100 may be configured to aspirate a urine sample or other samples from the sample container and to perform chromatographic analysis on at least part of the aspirated urine sample or other samples.

As an implementation, the second analyzer is a flow cytometer that uses an optical detection assembly to perform optical detection on a test solution flowing through a flow chamber.

As an implementation, the second analyzer is a cell analyzer, that is, the second analysis test is a cell analysis test.

As an implementation, the second analyzer is a hematology analyzer 200, that is, the second analysis test is a hematology analysis test. The hematology analyzer 200 is also referred to as a routine blood analyzer or hemocytometer, and the hematology analysis test is also referred to as a routine blood analysis test. The hematology analyzer 200 is configured to aspirate a blood sample from the sample container and to perform hematology analysis on at least part of the aspirated blood sample. Since hematology analysis has a relatively large detection demand in practical applications, interconnecting the liquid chromatography analyzer 100 with the hematology analyzer 200 allows the chromatographic analysis test and the hematology analysis test to share a blood sample in one sample container, so as to obtain both the chromatographic analysis result and the hematology analysis result from the blood sample in one sample container, thereby reducing the consumption of the blood sample collected from the patient and reducing the consumption of sample containers.

As an implementation, the sample transfer apparatus 300 includes a first transfer track 310 and a second transfer track 320. The first transfer track 310 is configured to transfer the sample container from the sample input apparatus 400 to the liquid chromatography analyzer 100, and the second transfer track 320 is configured to transfer the sample container from the sample input apparatus 400 to the hematology analyzer 200. The first transfer track 310 and the second transfer track 320 are integrally formed or connected to each other. That is, the first transfer track 310 and the second transfer track 320 may be the same transfer track or may be two transfer tracks joined together. The sample transfer apparatus 300 enables the sample container of the sample input apparatus 400 to be automatically delivered to the liquid chromatography analyzer 100 or to the hematology analyzer 200 without manually sorting and transferring the sample container between the liquid chromatography analyzer 100 and the hematology analyzer 200, thereby reducing the workload of operators and improving the testing efficiency of batch samples.

As an implementation, a sample aspiration position of the liquid chromatography analyzer 100 may be located inside the analyzer, or located outside the analyzer on the first transfer track 310. When the sample aspiration position of the liquid chromatography analyzer 100 is located inside the analyzer, a first sample aspiration channel is provided inside the liquid chromatography analyzer 100, and a sample container transferred to a lateral side of the liquid chromatography analyzer 100 via the first transfer track 310 may be dispatched to the sample aspiration position of the first sample aspiration channel by means of a first sample dispatching assembly.

As an implementation, a sample aspiration position of the hematology analyzer 200 may be located inside the analyzer, or located outside the analyzer on the second transfer track 320. When the sample aspiration position of the hematology analyzer 200 is located inside the analyzer, a first sample aspiration channel is provided inside the hematology analyzer 200, and a sample container transferred to the side of the hematology analyzer 200 via the second transfer track 320 may be dispatched to the sample aspiration position of the second sample aspiration channel by means of a second sample dispatching assembly.

As an implementation, the sample analysis system 10 further includes an information acquisition apparatus 600. The information acquisition apparatus 600 is configured to acquire information indicative of a type of test for the blood sample in the sample container. The control assembly 500 is configured to: determine the type of test for the blood sample in the sample container based on the information fed back by the information acquisition apparatus 600 indicative of the type of test for the blood sample in the sample container; and control, based on the type of test for the blood sample in the sample container, the sample transfer apparatus 300 to transfer the sample container to the liquid chromatography analyzer 100 and/or the hematology analyzer 200 for sample aspiration. The information acquisition apparatus 600 is configured such that the control assembly 500 can automatically determine which analyzer to transfer the sample container to for analysis based on the information fed back by the information acquisition apparatus 600.

As an implementation, the liquid chromatography analyzer 100 includes a sample supply assembly 110, a liquid-phase fluid supply assembly 120, a directional control valve 130, a sample solution preparation channel 140, a chromatographic column 150, and a detector 160. The sample supply assembly 110, the liquid-phase fluid supply assembly 120, the sample solution preparation channel 140 and the chromatographic column 150 are respectively connected to different ports of the directional control valve 130 via a liquid path, and the directional control valve 130 is mainly configured to switch the flow direction of a liquid in the liquid path. The sample supply assembly 110 is configured to aspirate the blood sample from the sample container and to supply a sample solution prepared from at least part of the aspirated blood sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150.

As an implementation, the directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another, the chromatographic column 150 being connected between the directional control valve 130 and the detector 160. The directional control valve 130 can be controlled by the control assembly 500 to switch between the first communication state and the second communication state. In the first communication state, the sample supply assembly 110 may drive the sample solution to be delivered to the sample solution preparation channel 140, and the liquid-phase fluid supply assembly 120 may drive the liquid-phase fluid to be delivered to the chromatographic column 150. In the second communication state, the liquid-phase fluid supply assembly 120 may drive the liquid-phase fluid to drive the sample solution in the sample solution preparation channel 140 to be delivered the chromatographic column 150, and the sample supply assembly 110 cannot drive the sample solution to be delivered to the sample solution preparation channel 140.

As an implementation, the liquid-phase fluid supply assembly 120 includes a first driving device 121 and an energy storage device 122. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 is configured to store potential energy and release the stored potential energy. In this embodiment, the energy storage device 122 is disposed in the liquid-phase fluid supply assembly 120 such that the liquid-phase fluid supply assembly 120 has the function of storing potential energy and releasing potential energy in addition to the function of supplying the liquid-phase fluid at a certain pressure.

As an implementation, the liquid-phase fluid supply assembly 120 further includes a locking/releasing device 123. The locking/releasing device 123 is configured to lock and release the energy storage device 122. The locking/releasing device 123 is switchable between a locked state and a released state. In practical applications, when the locking/releasing device 123 is in the released state, the energy storage device 122 may store potential energy under the pressure of the liquid-phase fluid; when the locking/releasing device 123 is in the locked state, the energy storage device 122 is locked, and the potential energy stored in the energy storage device 122 cannot be released; and when the locking/releasing device 123 switches from the locked state to the released state, the potential energy stored in the energy storage device 122 may be released. In this embodiment, an energy storage device 122 and a locking/releasing device 123 are provided in the liquid-phase fluid supply assembly 120; the locking/releasing device 123 is configured to release a potential energy storage and release assembly 1222 of the energy storage device 122 when in a released state to allow the energy storage device 122 to store potential energy and release potential energy under the pressure of the liquid-phase fluid; and the locking/releasing device 123 is configured to lock the potential energy storage and release assembly 1222 when in a locked state so as to prevent the energy storage device 122 from releasing the stored potential energy, such that the liquid-phase fluid supply assembly 120 has the function of storing potential energy and releasing potential energy in addition to the function of supplying the liquid-phase fluid at a certain pressure.

As an implementation, the energy storage device 122 includes a housing 1221 and a potential energy storage and release assembly 1222, the potential energy storage and release assembly 1222 is at least partially disposed within the housing 1221 and that partitions an interior of the housing 1221 to form a liquid chamber 1223 through which the liquid-phase fluid flows, and the potential energy storage and release assembly 1222 is at least partially movable relative to the housing 1221 to change a volume of the liquid chamber 1223 and to store potential energy or release the stored potential energy.

As an implementation, the locking/releasing device 123 is switchable between a locked state and a released state. In the locked state, the locking/releasing device 123 exerts an acting force on the potential energy storage and release assembly 1222 to lock the potential energy storage and release assembly 1222, so as to prevent the potential energy storage and release assembly 1222 from moving relative to the housing 1221 and thus prevent the potential energy storage and release assembly 1222 from releasing the stored potential energy; and in the released state, the potential energy storage and release assembly 1222 is movable relative to the housing 1221 under the pressure of the liquid-phase fluid to store potential energy, and when the locking/releasing device 123 removes the acting force exerted on the potential energy storage and release assembly 1222, the potential energy storage and release assembly 1222 is released, thereby allowing the potential energy storage and release assembly 1222 to move relative to the housing 1221 so as to allow the potential energy storage and release assembly 1222 to release the stored potential energy. In this embodiment, the locking/releasing device 123 directly exerts an acting force on the potential energy storage and release assembly 1222 to lock the potential energy storage and release assembly 1222.

As an implementation, the control assembly 500 is further configured to: during performance of a chromatographic analysis test for one sample (which can also be described as a current sample or a previous sample for ease of distinction), control the first driving device 121 to drive the liquid-phase fluid to flow so as to elute the sample solution adsorbed on the chromatographic column 150, and control the energy storage device 122 to store potential energy under the pressure of the liquid-phase fluid; and after completion of the chromatographic analysis test for one sample (the previous sample) and before performance of a chromatographic analysis test for a next sample, control the energy storage device 122 to release the potential energy stored during performance of the chromatographic analysis test for one sample (the previous sample), so as to assist in driving the liquid-phase fluid to flow toward the directional control valve 130 and the chromatographic column 150. In this embodiment, utilizing the potential energy stored in the energy storage device 122 can reduce energy loss and the consumption of the liquid-phase fluid; and utilizing the potential energy released by the energy storage device 122 to assist in rapid pressure buildup of the liquid-phase fluid can accelerate the pressure re-buildup for the next sample and thus solve the problem of the next sample having to wait for a long pressure buildup period before entering the liquid chromatography analyzer 100 for analysis such that test reports can be rapidly issued for each chromatographic analysis test, and when the liquid chromatography analyzer 100 is interconnected with a further analyzer, can prevent the liquid chromatography analyzer 100 from experiencing sample congestion in the transfer track due to prolonged period of sample queuing in the liquid chromatography analyzer and thus affecting sample transfer to the further analyzers, thereby fully ensuring the sample testing efficiency in an interconnected mode.

As an implementation, controlling the energy storage device 122 to store potential energy under the pressure of the liquid-phase fluid includes: controlling the locking/releasing device 123 to be in a released state to allow the energy storage device 122 to store potential energy under the pressure of the liquid-phase fluid. After completion of the chromatographic analysis test for one sample and before performance of a chromatographic analysis for a next sample, controlling the energy storage device 122 to release the potential energy stored during performance of the chromatographic analysis test for one sample includes: after completion of the chromatographic analysis test for one sample, controlling the locking/releasing device 123 to switch from the released state to the locked state so as to prevent the energy storage device 122 from releasing the stored potential energy, and controlling the first driving device 121 to stop driving the liquid-phase fluid to flow; and after the locking/releasing device 123 switches to the locked state, and during performance of the chromatographic analysis test for the next sample, controlling the locking/releasing device 123 to switch from the locked state to the released state, such that the energy storage device 122 releases the potential energy stored during performance of the chromatographic analysis test for one sample. In this embodiment, after completion of the chromatographic analysis test for one sample, the locking/releasing device 123 switches from the released state to the locked state so as to prevent the energy storage device 122 from releasing the stored potential energy, thereby achieving the effects of storing energy and holding pressure, such that during performance of the chromatographic analysis test for the next sample, the energy stored in the previous sample can be utilized to assist in rapid pressure buildup of the liquid-phase fluid. Of course, in practical applications, as an alternative embodiment, when two adjacent samples are injected continuously or at a small interval (e.g., less than a first preset period described below), pressure holding can also be achieved by controlling the first driving device 121 to maintain the liquid phase fluid to flow, without requiring the locking/releasing device 123 to switch from the released state to the locked state. However, this may result in large consumption of the liquid-phase fluid.

As an implementation, the control assembly 500 is further configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device 123 to switch from the released state to the locked state so as to prevent the potential energy storage and release assembly 1222 from moving relative to the housing 1221 and thus prevent the potential energy storage and release assembly 1222 from releasing the stored potential energy, and control the first driving device 121 to stop driving the liquid-phase fluid to flow; and after the locking/releasing device 123 switches to the locked state, if information indicating that a chromatographic analysis test is required for a blood sample is received, control the locking/releasing device 123 to switch from the locked state to the released state, such that the potential energy storage and release assembly 1222 is movable relative to the housing 1221 to release the stored potential energy, so as to assist in driving the liquid-phase fluid to flow toward the directional control valve 130 and the chromatographic column 150. In this embodiment, utilizing the potential energy stored in the energy storage device 122 can reduce energy loss in an intermittent sample injection scenario; and utilizing the potential energy released by the energy storage device 122 to assist in rapid pressure buildup of the liquid-phase fluid can accelerate the pressure re-buildup in the intermittent sample injection scenario and thus solve the problem of intermittently injected samples having to wait for a long pressure buildup period before entering the liquid chromatography analyzer 100 for analysis such that test reports can be rapidly issued for each chromatographic analysis test, and when the liquid chromatography analyzer 100 is interconnected with a further analyzer, can prevent the liquid chromatography analyzer 100 from experiencing sample congestion in the transfer track due to prolonged period of blood sample queuing in the liquid chromatography analyzer and thus affecting sample transfer to the further analyzers, thereby fully ensuring the sample testing efficiency in an interconnected mode. In addition, when the locking/releasing device 123 locks the potential energy storage and release assembly 1222, since the first driving device 121 in the liquid-phase fluid supply assembly 120 for driving the liquid-phase fluid to flow is in a stopped state, it is possible to avoid the overcurrent of loss and waste of the liquid-phase fluid caused by the continuous operation of the first driving device 121 when there is no blood sample to undergo a chromatographic analysis test.

As an implementation, the control assembly 500 is further configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid to store potential energy; within a first preset period after completion of the chromatographic analysis test for one blood sample, if no information indicating that a chromatographic analysis test is required for another blood sample is received, control the locking/releasing device 123 to switch from the released state to the locked state so as to prevent the potential energy storage and release assembly 1222 from moving relative to the housing 1221 and thus prevent the potential energy storage and release assembly 1222 from releasing the stored potential energy, and control the first driving device 121 to stop driving the liquid-phase fluid to flow; and after the locking/releasing device 123 switches to the locked state, if the information indicating that a chromatographic analysis test is required for a blood sample is received, control the locking/releasing device 123 to switch from the locked state to the released state such that the potential energy storage and release assembly 1222 is movable relative to the housing 1221 to release the stored potential energy, so as to assist in driving the liquid-phase fluid to flow toward the directional control valve 130 and the chromatographic column 150. In this embodiment, utilizing the potential energy stored in the energy storage device 122 can reduce energy loss in an intermittent sample injection scenario; and utilizing the potential energy released by the energy storage device 122 to assist in rapid pressure buildup of the liquid-phase fluid can accelerate the pressure re-buildup in the intermittent sample injection scenario and thus solve the problem of intermittently injected samples having to wait for a long pressure buildup period before entering the liquid chromatography analyzer 100 for analysis such that test reports can be rapidly issued for each chromatographic analysis test, and when the liquid chromatography analyzer 100 is interconnected with a further analyzer, can prevent the liquid chromatography analyzer 100 from experiencing sample congestion in the transfer track due to prolonged period of blood sample queuing in the liquid chromatography analyzer and thus affecting sample transfer to the further analyzers, thereby fully ensuring the sample testing efficiency in an interconnected mode. In addition, when the locking/releasing device 123 locks the potential energy storage and release assembly 1222, since the first driving device 121 in the liquid-phase fluid supply assembly 120 for driving the liquid-phase fluid to flow is in a stopped state, it is possible to avoid the overcurrent of loss and waste of the liquid-phase fluid caused by the continuous operation of the first driving device 121 when there is no blood sample to undergo a chromatographic analysis test.

As an implementation, the potential energy stored and released by the potential energy storage and release assembly 1222 is elastic potential energy. Specifically, the potential energy storage and release assembly 1222 converts part of pressure energy of the liquid-phase fluid into elastic potential energy for storage by means of driving deformation of an elastic component and releases the stored energy when needed, which features a simple structure and a low cost. The potential energy storage and release assembly 1222 utilizes an assembly that stores and releases elastic potential energy, such that the potential energy storage and release assembly 1222 can further function to eliminate pressure pulsations or flow pulsations of the liquid-phase fluid within a pipe. Of course, in practical applications, the configuration of the potential energy storage and release assembly 1222 is not limited to this. For example, as an alternative embodiment, the potential energy stored and released by the potential energy storage and release assembly 1222 is gravitational potential energy, and converts pressure energy of the liquid-phase fluid into gravitational potential energy for accumulation by lifting a mass block loaded onto a sealed piston. Alternatively, as another alternative embodiment, the potential energy stored and released by the potential energy storage and release assembly 1222 is internal energy of gas, and energy conversion is achieved by compressing the gas. During use, the energy storage device 122 is first charged with a gas at a predetermined pressure. When the pressure of the liquid-phase fluid exceeds an internal pressure of the energy storage device 122, the liquid-phase fluid compresses the gas to convert the pressure of the liquid-phase fluid into the internal energy of gas. When the pressure of the liquid-phase fluid is lower than the internal pressure of the energy storage device 122, the liquid-phase fluid within the energy storage device 122 flows out of the energy storage device 122 under an action of the high-pressure gas to release energy.

As an implementation, the locking/releasing device 123 exerts the acting force on the potential energy storage and release assembly 1222 to lock the potential energy storage and release assembly 1222 in a non-liquid-path-locking manner, and the locking/releasing device 123 removes the acting force exerted on the potential energy storage and release assembly 1222 to release the potential energy storage and release assembly 1222 in a non-liquid-path-conducting manner. In this embodiment, the locking/releasing device 123 is not connected to the energy storage device 122 via a liquid path, but instead achieves the locking and releasing of the potential energy storage and release assembly 1222 of the energy storage device 122 via a mechanical structure. In this way, the provision of the locking/releasing device 123 does not affect the original liquid path system of the liquid chromatography analyzer 100.

As an implementation, the locking/releasing device 123 exerts an acting force on the potential energy storage and release assembly 1222 by means of abutting against the potential energy storage and release assembly 1222 so as to lock the potential energy storage and release assembly 1222, and the locking/releasing device 123 removes the acting force exerted on the potential energy storage and release assembly 1222 by means of disengaging from the potential energy storage and release assembly 1222 so as to release the potential energy storage and release assembly 1222. In this embodiment, the locking/releasing device 123 locks and restricts the potential energy storage and release assembly 1222 by means of a direct contact with the potential energy storage and release assembly 1222, and the locking/releasing device 123 releases the potential energy storage and release assembly 1222 by means of disengaging from the potential energy storage and release assembly 1222. Of course, in practical applications, as an alternative embodiment, the locking/releasing device 123 may also exert an acting force to the potential energy storage and release assembly 1222 in a manner of non-contact with the potential energy storage and release assembly 1222 so as to lock the potential energy storage and release assembly 1222, for example, by means of magnetic attraction.

As an implementation, the potential energy storage and release assembly 1222 has an engagement portion 1222d protruding from the housing 1221, and the locking/releasing device 123 exerts the acting force on the potential energy storage and release assembly 1222 by means of restricting the engagement portion 1222d so as to lock the potential energy storage and release assembly 1222; and the locking/releasing device 123 removes the acting force exerted on the potential energy storage and release assembly 1222 by means of releasing the engagement portion 1222d so as to release the potential energy storage and release assembly 1222. In this embodiment, the locking/releasing device 123 locks the potential energy storage and release assembly 1222 by means of restricting the engagement portion 1222d of the potential energy storage and release assembly 1222 protruding from the housing 1221, without the need to machine a structure fitting with the locking/releasing device 123 on the housing 1221, so as to simplify the structure of the energy storage device 122. Of course, in practical applications, as an alternative embodiment, the locking/releasing device 123 may also be configured to be disposed through the housing 1221 so as to lock and restrict the potential energy storage and release assembly 1222.

As an implementation, the locking/releasing device 123 includes a power component 1231, a locking component 1232, and a transmission component 1233 in transmission connection between the power component 1231 and the locking component 1232. The power component 1231 is configured to drive the transmission component 1233 to move, and the movement of the transmission component 1233 causes the locking component 1232 to move, such that the locking component 1232 moves to a locked position or an unlocked position. In the locked position, the locking component 1232 abuts against the potential energy storage and release assembly 1222 to lock the potential energy storage and release assembly 1222. In the unlocked position, the locking component 1232 is disengaged from the potential energy storage and release assembly 1222 to release the potential energy storage and release assembly 1222.

As an implementation, when the locking/releasing device 123 is in the locked state, the locking component 1232 is in the locked position to lock the potential energy storage and release assembly 1222.

As an implementation, the transmission component 1233 has a self-locking capability, and when the locking/releasing device 123 is in the locked state, the power component 1231 is in a stopped state, and the locking component 1232 is maintained in the locked position by means of a locking force generated by self-locking of the transmission component 1233 so as to lock the potential energy storage and release assembly 1222. In this embodiment, through the self-locking of the transmission component 1233, the locking component 1232 is maintained in the state of locking the potential energy storage and release assembly 1222 without requiring the power component 1231 to supply power for blocking, the power component 1231 is only configured to drive the transmission component 1233 to cause the locking component 1232 to move between the locked position and the unlocked position, thereby reducing load requirements of the power component 1231 and thus being conducive to reducing the cost of the locking/releasing device 123.

As an implementation, the power component 1231 is a motor; when the locking/releasing device 123 is in the locked state, the motor is in a stopped state, and the locking component 1232 is maintained in the locked position by means of a locking force generated by self-locking of the transmission component 1233 so as to lock the potential energy storage and release assembly 1222; when the locking/releasing device 123 is in the released state, the motor is in the stopped state, and the locking component 1232 is in the unlocked position to release the potential energy storage and release assembly 1222; when the locking/releasing device 123 switches from the locked state to the released state, the motor is in an operating state so as to drive the locking component 1232 to move from the locked position to the unlocked position by means of the transmission component 1233; and when the locking/releasing device 123 switches from the released state to the locked state, the motor is in the operating state so as to drive the locking component 1232 from the unlocked position to the locked position by means of the transmission component 1233.

As an implementation, the potential energy storage and release assembly 1222 has an engagement portion 1222d protruding from the housing 1221, the engagement portion 1222d having an engagement end face facing the liquid chamber 1223; and the locking component 1232 is formed with a locking portion 1232a, the locking portion 1232a being configured to be driven by the power component 1231 and the transmission component 1233 to move between the locked position and the unlocked position.

As an implementation, controlling the locking/releasing device 123 to switch to the locked state so as to prevent the energy storage device 122 from releasing the stored potential energy includes: controlling the power component 1231 to be activated and operate, so as to drive the transmission component 1233 to cause the locking portion 1232a to move from the unlocked position to the locked position, such that the locking portion 1232a abuts against the engagement end face, and after the locking portion 1232a moves to the locked position, controlling the power component 1231 to stop operating, such that the locking portion 1232a is maintained in the locked position under an action of the locking force generated by self-locking of the transmission component 1233.

As an implementation, controlling the locking/releasing device 123 to switch from the locked state to the released state such that the energy storage device 122 releases the stored potential energy includes: controlling the power component 1231 to be activated and operate, so as to drive the transmission component 1233 to cause the locking portion 1232a to move from the locked position to the unlocked position to cause the locking portion 1232a to disengage from the engagement end face, such that the potential energy storage and release assembly 1222 releases the stored potential energy and moves toward the liquid chamber 1223 so as to drive the liquid-phase fluid in the liquid chamber 1223 to flow out of the liquid chamber 1223.

As an implementation, the locking/releasing device 123 further includes a detection component 1234. The control assembly 500 is further configured to: while the power component 1231 drives the transmission component 1233 to cause the locking portion 1232a to move from the unlocked position to the locked position, acquire feedback information from the detection component 1234, and when it is determined that the locking portion 1232a moves to the locked position based on feedback information from the detection component 1234, control the power component 1231 to stop operating.

As an implementation, the detection component 1234 is a reflective photoelectric sensor, a through-beam photoelectric sensor, or a proximity switch.

As an implementation, the potential energy stored and released by the potential energy storage and release assembly 1222 is elastic potential energy. The potential energy storage and release assembly 1222 includes a diaphragm 1222a, an elastic element 1222b, and a guide rod 1222c. The diaphragm 1222a is disposed within the housing 1221 and fits with an inner wall of the housing 1221 to form the liquid chamber 1223. One end of the guide rod 1222c is connected to the diaphragm 1222a, and the other end of the guide rod 1222c protrudes from the housing 1221 and forms the engagement portion 1222d. The elastic element 1222b is located within the housing 1221 and sleeved on the guide rod 1222c. The locking/releasing device 123 being in the locked state includes: the locking portion 1232a abutting against the engagement portion 1222d to lock the engagement portion 1222d such that the elastic element 1222b stores elastic potential energy. The locking/releasing device 123 being in the released state includes: the locking portion 1232a being disengaged from the engagement portion 1222d to release the engagement portion 1222d to allow the elastic element 1222b to release the elastic potential energy.

As an implementation, when the locking/releasing device 123 is in the released state, the guide rod 1222c can overcome the acting force exerted by the elastic element 1222b to move away from the liquid chamber 1223 under the pressure of the liquid-phase fluid, and can move toward the liquid chamber 1223 under the acting force exerted by the elastic element 1222b; and when the locking/releasing device 123 is in the locked state, the guide rod 1222c can overcome the acting force exerted by the elastic element 1222b to move away from the liquid chamber 1223 under the pressure of the liquid-phase fluid, and cannot move toward the liquid chamber 1223 under the acting force exerted by the elastic element 1222b.

As an implementation, the first driving device 121 may be a plunger pump.

As an implementation, through the elastic element 1222b, the energy storage device 122 can smooth the pulsating flow output by the first driving device 121 so as to reduce flow fluctuations.

As an implementation, the diaphragm 1222a is a membrane made of an elastic material, and is sealed around its periphery and is provided with a rod embedded in its center. The rod is connected to or integrally formed with the guide rod 1222c.

As an implementation, the elastic element 1222b has a stiffness greater than or equal to 500 N/mm and less than or equal to 30,000 N/mm.

As an implementation, the elastic element 1222b includes at least one pair of disc spring stacks. The disc springs have high elasticity, which can meet the requirement of providing a relatively large driving force for the liquid-phase fluid.

As an implementation, the transmission component 1233 includes a screw drive pair, that has a lead angle less than an equivalent friction angle.

As an implementation, the transmission component 1233 includes a screw drive pair that is a trapezoidal screw drive pair. In this embodiment, the torque of the motor only needs be sufficient to cause the locking component 1232 to move in a no-load motion, without the need to overcome the force of the elastic element 1222b. Therefore, in this embodiment, the output torque of the motor may be set to be far less than a torque required to pull the deformed elastic element 1222b.

As an implementation, the screw drive pair includes a lead screw and a nut. The nut is connected to the lead screw, and is connected to a guide shaft. The function of the guide shaft is to convert a rotational movement of the nut into a linear movement. The locking component 1232 is connected to the nut of the screw drive pair. In this embodiment, the screw drive pair is a trapezoidal screw drive pair with a self-locking function, which satisfies a self-locking condition that the lead angle is less than the equivalent friction angle. An output shaft of the motor is fixedly connected to the lead screw to supply power for the rotation of the lead screw.

As an implementation, that detection component 1234 is an optocoupler fixed to a base. An optocoupler baffle is connected to the locking component 1232.

As an implementation, the working principle of the energy storage device 122 and the locking/releasing device 123 is: when a high-pressure liquid-phase fluid flows into the energy storage device 122, the diaphragm 1222a deforms toward a side where the elastic element 1222b is located under the pressure of the liquid-phase fluid, and a load is transmitted to the elastic element 1222b via the guide rod 1222c, so as to convert the potential energy of the liquid-phase fluid into the elastic potential energy of the elastic element 1222b. At this time, the guide rod 1222c moves away from the liquid chamber 1223. In this embodiment, the locking portion 1232a pulls the protruding engagement portion 1222d of the guide rod 1222c so as to prevent it from rebounding under the action of the elastic element 1222b, such that the elastic element 1222b retains its elastic potential energy. When the locking/releasing device 123 is in an initial position, the diaphragm 1222a of the energy storage device 122 is not deformed, and the elastic element 1222b inside the energy storage device 122 is in an initial state (preloaded or unstressed). When the energy storage device 122 operates, the diaphragm 1222a deforms away from the liquid chamber 1223 to cause the guide rod 1222c to displace toward the side where the elastic element 1222b is located, and fluctuates within a small range with the input of pulsating flow of the liquid-phase fluid. When the energy storage device 122 stops operation, its pressure gradually decreases due to a system damping effect, and at this time, the guide rod 1222c gradually moves toward the liquid chamber 1223 under the action of the elastic element 1222b. At this time, the motor of the locking/releasing device 123 rotates to cause the locking component 1232 to move away from the liquid chamber 1223 until the locking portion 1232a comes into contact with the engagement portion 1222d of the guide rod 1222c. At this time, the motor drives the locking component 1232 to move a certain distance away from the liquid chamber 1223 and then stops, the distance being greater than the maximum distance that the guide rod 1222c moves to the right. Since the torque of the motor is insufficient to overcome the force of the elastic element 1222b, the guide rod 1222c will not be excessively pulled to the right, and at this time the motor may experience a short-time stalling. Due to the self-locking effect of the screw drive pair, the guide rod 1222c does not continue to move to the left under the action of the elastic element 1222b, but instead continues to be maintained in this state. At this time, since the liquid within the liquid chamber 1223 is not subjected to an additional load, it only flows out in a small amount, thereby reducing the consumption of the liquid-phase fluid. During the next pressure buildup, only a small amount of liquid-phase fluid is required to fill the liquid chamber 1223, thereby reducing the pressure buildup period. Moreover, after completion of the pressure buildup of the liquid path system, the guide rod 1222c moves to the right again under pressure and is disengaged from the locking component 1232, and at this time the motor drives the locking component 1232 to return to the initial position so as to be ready for the next locking of the guide rod 1222c.

As an implementation, if the information indicating that a chromatographic analysis test is required for a blood sample is received, controlling the locking/releasing device 123 to switch from the locked state to the released state includes: if the information indicating that a chromatographic analysis test is required for a blood sample is received, controlling the first driving device 121 to be activated and operate, and then controlling the locking/releasing device 123 to switch from the locked state to the released state. In this embodiment, before the locking/releasing device 123 switches from the locked state to the released state, the first driving device 121 is controlled to be activated and operate such that the liquid-phase fluid has a certain pressure, so as to avoid the disadvantageous phenomenon where a total release of the potential energy when the locking/releasing device 123 switches from the locked state to the released state would otherwise require a relatively large pressure to re-drive the potential energy storage and release assembly 1222 to push open.

As an implementation, the control assembly 500 is further configured to: during performance of a chromatographic analysis test, control the first driving device 121 to drive the liquid-phase fluid to flow at the target pressure value or at a pressure value within the target pressure range, so as to elute the sample solution adsorbed on the chromatographic column 150; and before performance of a first chromatographic analysis test after startup of the liquid chromatography analyzer 100, control the first driving device 121 to be activated and operate for a third preset period to cause the pressure of the liquid-phase fluid flowing toward the chromatographic column 150 to reach the target pressure value or the target pressure range; The third preset period is a pressure buildup period before performance of the first chromatographic analysis test after startup of the liquid chromatography analyzer 100, that is, a period for which the pressure of the liquid-phase fluid in the liquid path system increases from zero to the target pressure value or the target pressure range.

As an implementation, the target pressure value is greater than or equal to 2 MPa and less than or equal to 10 MPa.

As an implementation, the target pressure value is greater than or equal to 4 MPa and less than or equal to 6 MPa.

As an implementation, controlling the first driving device 121 to be activated and operate and then controlling the locking/releasing device 123 to switch from the locked state to the released state include: controlling the first driving device 121 to be activated and operate for a second preset period to cause a pressure of the liquid-phase fluid flowing toward the chromatographic column 150 to be greater than zero and less than a target pressure value or less than a lower limit value of a target pressure range, and then controlling the locking/releasing device 123 to switch from the locked state to the released state. The control assembly 500 is further configured to: after the locking/releasing device 123 is controlled to switch from the locked state to the released state, control the first driving device 121 to continue to operate for a fourth preset period to cause the pressure of the liquid-phase fluid flowing toward the chromatographic column 150 to reach substantially the target pressure value or the target pressure range, and then control the directional control valve 130 to switch to the second communication state such that the liquid-phase fluid supply assembly 120 drives the sample solution in the sample solution preparation channel 140 to be delivered to the chromatographic column 150 by means of the liquid-phase fluid. The sum of the second preset period and the fourth preset period is less than the third preset period. The sum of the second preset period and the fourth preset period is the pressure buildup period during the intermittent sample injection process. In this embodiment, the potential energy stored in the energy storage device 122 assists in the pressure buildup drive during the intermittent sample injection process, shortening the buildup period during the intermittent sample injection process.

Preferably, the sum of the second preset period and the fourth preset period is less than half of the third preset period.

Preferably, the sum of the second preset period and the fourth preset period is less than or equal to one tenth of the third preset period.

As an implementation, the housing 1221 is formed with a liquid inlet 1221a for the liquid-phase fluid to flow into the liquid chamber 1223 and a liquid outlet 1221b for the liquid-phase fluid to flow out of the liquid chamber 1223; after the locking/releasing device 123 is controlled to switch to the locked state and the first driving device 121 is controlled to stop driving the liquid-phase fluid to flow, and before the first driving device 121 is controlled to be activated and the locking/releasing device 123 is controlled to switch from the locked state to the released state, the pressure value of the liquid-phase fluid at the liquid outlet 1221b is a first pressure value; after the first driving device 121 is activated and operates for the second preset period, and during the process of switching the locking/releasing device 123 from the locked state to the released state, the pressure value of the liquid-phase fluid at the liquid outlet 1221b is a second pressure value; and after the locking/releasing device 123 switches from the locked state to the released state, the pressure value of the liquid-phase fluid at the liquid outlet 1221b is a third pressure value. The second pressure value is greater than the first pressure value and greater than the third pressure value. In this embodiment, during the process of intermittent sample injection and pressure re-buildup, the pressure of the liquid-phase fluid increases and then decreases under the auxiliary drive of the potential energy released by the energy storage device 122, thereby facilitating rapid pressure buildup.

As an implementation, the first pressure value is less than the target pressure value or less than the lower limit value of the target pressure range; the second pressure value is greater than the target pressure value or greater than an upper limit value of the target pressure range; and the third pressure value is substantially equal to the target pressure value or falls within the target pressure range.

As an implementation, after the locking/releasing device 123 is controlled to switch to the locked state and the first driving device 121 is controlled to stop driving the liquid-phase fluid to flow, and before the first driving device 121 is controlled to be activated and the locking/releasing device 123 is controlled to switch from the locked state to the released state, the volume of the liquid chamber 1223 is a first volume; after the first driving device 121 is activated and operates for a second preset period, and before the locking/releasing device 123 switches from the locked state to the released state, the volume of the liquid chamber 1223 is a second volume; and after the locking/releasing device 123 switches from the locked state to the released state, the volume of the liquid chamber 1223 is a third volume. The second volume is greater than the first volume and greater than the third volume. In this embodiment, during the process of intermittent sample injection and pressure re-buildup, the volume of the liquid chamber 1223 increases and then decreases, thereby facilitating rapid pressure buildup.

As an implementation, the first volume is less than or substantially equal to the volume of the liquid chamber 1223 during performance of the chromatographic analysis test, the second volume is greater than the volume of the liquid chamber 1223 during performance of the chromatographic analysis test, and the third volume is substantially equal to the volume of the liquid chamber 1223 during performance of the chromatographic analysis test.

As an implementation, after the locking/releasing device 123 is controlled to switch to the locked state and the first driving device 121 is controlled to stop driving the liquid-phase fluid to flow, and before the first driving device 121 is controlled to be activated and the locking/releasing device 123 is controlled to switch from the locked state to the released state, the potential energy of the energy storage device 122 is first potential energy; after the first driving device 121 is controlled to be activated and operate for a second preset period, and before the locking/releasing device 123 is controlled to switch from the locked state to the released state, the potential energy stored in the energy storage device 122 is second potential energy; and after the locking/releasing device 123 switches from the locked state to the released state, the potential energy stored in the energy storage device 122 is third potential energy. The second potential energy is greater than the first potential energy and greater than the third potential energy.

As an implementation, the first potential energy is less than or substantially equal to the potential energy stored in the energy storage device 122 during performance of the chromatographic analysis test, the first potential energy is greater than the potential energy stored in the energy storage device 122 during performance of the chromatographic analysis test, and the third potential energy is substantially equal to the potential energy stored in the energy storage device 122 during performance of the chromatographic analysis test.

As an implementation, the energy storage device 122 is provided with a liquid inlet 1221a for inflow of the liquid-phase fluid and a liquid outlet 1221b for outflow of the liquid-phase fluid; and after the locking/releasing device 123 is controlled to switch to the locked state and the first driving device 121 is controlled to stop driving the liquid-phase fluid to flow, and before the first driving device 121 is controlled to be activated and the locking/releasing device 123 is controlled to switch from the locked state to the released state, the pressure value of the liquid-phase fluid at the liquid outlet 1221b is a first pressure value. The first pressure value is substantially zero. In this embodiment, when the first driving device 121 stop driving the liquid-phase fluid to flow and the energy storage device 122 is in the locked state, the pressure value of the liquid-phase fluid is substantially zero, which is conducive to reducing the wear and tear on liquid path components caused by maintaining high pressure in the liquid path for a long time.

As an implementation, within the first preset period after completion of the chromatographic analysis test for one blood sample, if no information indicating that a chromatographic analysis test is required for another blood sample is received, controlling the locking/releasing device 123 to switch to the locked state, and controlling the first driving device 121 to stop driving the liquid-phase fluid to flow include: within the first preset period after completion of the chromatographic analysis test for one blood sample, if no information indicating that a chromatographic analysis test is required for another blood sample is received, controlling the locking/releasing device 123 to switch to the locked state, and then controlling the first driving device 121 to stop driving the liquid-phase fluid to flow. In this embodiment, when it is required to lock the energy storage device 122 to lock and store the potential energy, the locking/releasing device 123 is first controlled to switch to the locked state, and then the first driving device 121 is controlled to stop operating, which is conducive to preventing the energy storage device 122 from releasing the potential energy under the action of the pressure of the liquid-phase fluid when the locking/releasing device 123 switches to the locked state, thereby effectively locking and storing the potential energy of the energy storage device 122. Of course, in practical applications, the control sequence of the locking/releasing device 123 and the first driving device 121 is not limited to this. For example, as an alternative embodiment, within the first preset period after completion of the chromatographic analysis test for one blood sample, if no information indicating that a chromatographic analysis test is required for another blood sample is received, the locking/releasing device 123 is controlled to switch to the locked state and the first driving device 121 is controlled to stop driving the liquid-phase fluid to flow simultaneously. Alternatively, as another alternative embodiment, within the first preset period after completion of the chromatographic analysis test for one blood sample, if no information indicating that a chromatographic analysis test is required for another blood sample is received, the first driving device 121 is first controlled to stop driving the liquid-phase fluid to flow, and then the locking/releasing device 123 is controlled to switch to the locked state.

As an implementation, the control assembly 500 is further configured to: control the sample supply assembly 110 to complete, within a fifth preset period, following sample solution preparation operation: aspirating a blood sample from the sample container and dispensing the blood sample to a first reaction container 112, and delivering a sample solution prepared from at least the blood sample and a hemolytic agent in the first reaction container 112 to the sample preparation channel via the directional control valve 130; when the locking/releasing device 123 is in the locked state, if the information indicating that a chromatographic analysis test is required for a blood sample is received, control the liquid-phase fluid supply assembly 120 to complete, within a sixth preset period, following pressure buildup operation: controlling the first driving device 121 to be activated and operate, and controlling the locking/releasing device 123 to switch from the locked state to the released state such that a pressure at which the liquid-phase fluid supply assembly 120 drives the liquid-phase fluid to flow toward the chromatographic column 150 reaches a target pressure value or a target pressure range within the sixth preset period; and during performance of a chromatographic analysis test, control the first driving device 121 to drive the liquid-phase fluid to flow at the target pressure value or at a pressure value within the target pressure range, so as to elute the sample solution adsorbed on the chromatographic column 150. The sixth preset period is less than the fifth preset period. The sixth preset period is equal to the sum of the second preset period and the fourth preset period. In this embodiment, in an intermittent scenario, the pressure re-buildup period is less than the period for sample solution preparation, which enables the pressure re-buildup and the sample solution preparation to be carried out simultaneously.

As an implementation, the control assembly 500 is further configured to: when the locking/releasing device 123 is in the locked state and the directional control valve 130 is in the first communication state, if the information indicating that a chromatographic analysis test is required for a blood sample is received, control the sample supply assembly 110 to perform following sample solution preparation operation: aspirating a blood sample from the sample container and dispensing the blood sample to a first reaction container 112, and delivering a sample solution prepared from at least the blood sample and a hemolytic agent in the first reaction container 112 to the sample preparation channel via the directional control valve 130; during performance of the sample solution preparation operation by the sample supply assembly 110, controlling the first driving device 121 to be activated and operate, controlling the locking/releasing device 123 to switch from the locked state to the released state, and controlling the directional control valve 130 to remain in the first communication state; and after completion of the sample solution preparation operation by the sample supply assembly 110, controlling the directional control valve 130 to switch from the first communication state to the second communication state such that the liquid-phase fluid supply assembly 120 drives the sample solution in the sample solution preparation channel 140 to be delivered to the chromatographic column 150 by means of the liquid-phase fluid. In this embodiment, when a blood sample requiring a chromatographic analysis test is transferred to the liquid chromatography analyzer 100, the sample solution preparation operation can be performed immediately without waiting, which achieves an effect of immediate-to-test for the blood samples upon arrival at the liquid chromatography analyzer 100, thereby effectively avoiding sample congestion in the transfer tracks due to sample containers queuing on the transfer tracks.

As an implementation, the control assembly 500 is further configured to: in the case where the locking/releasing device 123 continuously remains in the locked state for a seventh preset period, if no information indicating that a chromatographic analysis test is required for a blood sample is received, control the locking/releasing device 123 to switch from the locked state to the released state such that the energy storage device 122 releases the stored potential energy. The seventh preset period is greater than a period required to complete one chromatographic analysis test and greater than the first preset period. In this embodiment, limiting the period for which the locking/releasing device 123 continuously locks the energy storage device 122 is conducive to avoiding the adverse effects on the service life of the potential energy storage and release assembly 1222 caused by being deformed for a long time.

As an implementation, the seventh preset period is greater than or equal to a period required to complete ten chromatographic analysis tests.

As an implementation, the seventh preset period is greater than or equal to 5 minutes and less than or equal to 2 hours.

As an implementation, the liquid chromatography analyzer 100 further includes a waste liquid channel 190. In the first communication state, the directional control valve 130 places the sample supply assembly 110, the sample solution preparation channel 140 and the waste liquid channel 190 in communication with one another and places the liquid-phase fluid supply assembly 120 in communication with the chromatographic column 150; and in the second communication state, the directional control valve 130 places the liquid-phase fluid supply assembly 120, the sample solution preparation channel 140 and the chromatographic column 150 in communication with one another and places the sample supply assembly 110 in communication with the waste liquid channel 190.

As an implementation, the liquid-phase fluid supply assembly 120 further includes a third driving device 124. The first driving device 121 is configured to drive the liquid-phase fluid to flow toward the directional control valve 130 and the chromatographic column 150, including: the first driving device 121 aspirating a first fluid from a first fluid container 20 and discharging the first fluid to the directional control valve 130 and the chromatographic column 150. The third driving device 124 is configured to aspirate a second fluid from a second fluid container 30 and discharge the second fluid to the directional control valve 130 and the chromatographic column 150. During the process of the liquid-phase fluid supply assembly 120 driving the sample solution in the sample solution preparation channel 140 to be delivered to the chromatographic column 150, the first driving device 121 is controlled to maintain in an operating state, and the third driving device 124 is controlled to be in a stopped state. The control assembly 500 is further configured to: during the elution for one sample solution, control both the first driving device 121 and a second driving device 126 to operate, and adjust operating parameters of the first driving device 121 and the second driving device 126, such that the liquid-phase fluid supply assembly 120 supplies at least two types of liquid-phase fluids containing different concentrations of the second fluid to the chromatographic column 150 during different periods. An ionic strength of the second fluid is greater than an ionic strength of the first fluid. In this embodiment, liquid-phase fluids of different concentrations can be configured online, and the effect of gradient elution can be achieved.

As an implementation, the liquid-phase fluid supply assembly 120 further includes a casing assembly 180 and a mixing component 125. The mixing component 125 is provided with a first input port, a second input port, and an output port. The energy storage device 122 is connected between the first input port and the first driving device 121 via a liquid path, the third driving device 124 is connected to the second input port, and the directional control valve 130 is connected to the output port. The casing assembly 180 is formed with a first fluid compartment for receiving a first fluid container 20 and a second fluid compartment for receiving a second fluid container 30. The first driving device 121 is configured to aspirate the first fluid from the first fluid container 20 and push the first fluid to the directional control valve 130, and the third driving device 124 is configured to aspirate the second fluid from the second fluid container 30 and push the second fluid to the directional control valve 130. In this embodiment, eluents containing different concentrations of the second fluid may be prepared by adjusting different mixing ratios of the first fluid and the second fluid, so as to enable online preparation of eluents with different concentrations, which meets requirements for different eluent concentrations and is conducive to reducing the material consumption and material costs.

As an implementation, the first fluid may specifically be liquid A, and the second fluid may specifically be liquid B.

Of course, in practical applications, the liquid-phase fluid supply assembly 120 is not limited to the gradient elution solution described above. For example, as an alternative embodiment, the liquid-phase fluid supply assembly 120 may also employ isocratic elution. In this alternative embodiment, the liquid-phase fluid supply assembly 120 further includes a switching member. An input end of the first driving device 121 is connected to a third fluid container loaded with a third fluid and to a fourth fluid container loaded with a fourth fluid by means of the switching member in a switchable manner. The first driving device 121 is configured to drive the liquid-phase fluid to flow toward the directional control valve 130 and the chromatographic column 150, including: in a state in which the switching member places the first driving device 121 in communication with the third fluid container, the first driving device 121 aspirating the third fluid from the third fluid container and discharging the third fluid to the directional control valve 130 and the chromatographic column 150; and in a state in which the switching member places the first driving device 121 in communication with the fourth fluid container, the first driving device 121 aspirating the fourth fluid from the fourth fluid container and discharging the fourth fluid to the directional control valve 130 and the chromatographic column 150. The third fluid and the fourth fluid are two types of liquid-phase fluids containing different concentrations of the second fluid. During the process of the liquid-phase fluid supply assembly 120 driving the sample solution in the sample solution preparation channel 140 to be delivered to the chromatographic column 150, the switching member places the first driving device 121 in communication with the third fluid container, and the first driving device 121 is controlled to be activated and be in an operating state. The control assembly 500 is further configured to: during elution for one sample solution, in a first elution stage, control the switching member to place the first driving device 121 in communication with the third fluid container, and control the first driving device 121 to aspirate the third fluid from the third fluid container and discharge the third fluid to the directional control valve 130 and the chromatographic column 150; and in a second elution stage, control the switching member to place the first driving device 121 in communication with the fourth fluid container, and control the first driving device 121 to aspirate the fourth fluid from the fourth fluid container and discharge the fourth fluid to the directional control valve 130 and the chromatographic column 150, such that the liquid-phase fluid supply assembly 120 supplies at least two types of liquid-phase fluids containing different concentrations of the second fluid to the chromatographic column 150 during different periods.

As an implementation, the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to aspirate a hemolytic agent from a hemolytic agent container 40 and dispense the hemolytic agent to the first reaction container 112, and to transfer the sample solution prepared from at least the sample and the hemolytic agent in the first reaction container 112 to the sample solution preparation channel 140 via the directional control valve 130. A suction and discharge power component 1231 is provided in the sample delivery liquid path 113. In this embodiment, the hemolytic agent is dispensed to the first reaction container 112 via the sample delivery liquid path 113, such that the sample delivery liquid path 113 can be reused, thereby eliminating the need to provide an additional pipetting needle for dispensing the hemolytic agent. The hemolytic agent enables the red blood cells in the sample to release hemoglobin mainly by lysing the red blood cells, such that the whole blood sample can be treated into a sample solution. Of course, in practical applications, the hemolytic agent may also be replaced with deionized water, pure water or distilled water that swells and ruptures the red blood cells in the sample under the action of osmotic pressure. The deionized water, pure water or distilled water mainly swells and ruptures the red blood cells in the whole blood sample under the action of osmotic pressure, causing the red blood cells in the sample to release hemoglobin, such that the whole blood sample can also be treated into a sample solution.

As an implementation, the sampling component 111 includes a sample needle and a motion driving component configured to drive the movement of the sample needle.

As an implementation, the liquid chromatography analyzer 100 further includes a display screen assembly 170. The display screen assembly 170 is disposed on one side of the casing assembly 180 to allow for an operator to view chromatographic analysis information of the blood sample.

As an implementation, in the operation process of the liquid chromatography analyzer 100: the sample supply assembly 110 aspirates a sample from the sample container and dispenses the sample to the first reaction container 112, and dispenses a hemolytic agent to the first reaction container 112; the sample supply assembly 110 pushes the sample solution prepared from the sample and the hemolytic agent in the first reaction container 112 to the sample solution preparation channel 140; the liquid-phase fluid supply assembly 120 uses the liquid-phase fluid to drive the sample solution in the sample solution preparation channel 140 to be pushed to the chromatographic column 150; the liquid-phase fluid supply assembly 120 pushes the liquid-phase fluid to the chromatographic column 150 to elute the sample solution adsorbed on the chromatographic column 150; and the detector 160 performs chromatographic analysis on a test solution eluted from the chromatographic column 150.

As an implementation, the liquid chromatography analyzer 100 is a glycated hemoglobin analyzer.

As an implementation, the hematology analyzer 200 is configured at least to perform white blood cell differential count on a blood sample.

As an implementation, the hematology analyzer 200 is further configured to perform at least one of the following tests on the blood sample: reticulocyte count, hemoglobin test, red blood cell count, and platelet count.

As an implementation, the hematology analyzer 200 performs white blood cell differential count and reticulocyte count, by means of an optical detection assembly, on a test solution for optical detection (prepared from at least a sample) flowing through a detection zone of a flow chamber under the entrainment of a sheath fluid.

As an implementation, the hematology analyzer 200 performs red blood cell count and platelet count on a test solution for impedance detection (prepared from at least a sample) by means of an impedance detection assembly.

As an implementation, the control assembly 500 includes a first controller disposed in the liquid chromatography device and a second controller disposed in the hematology analyzer 200.

This example further provides a liquid chromatography device including a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120110 in communication with the chromatographic column 150, and a second communication state in which the directional control valve 130 places the liquid-phase fluid supply assembly 120110, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120110 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform analysis on the test solution flowing out of the chromatographic column 150. The liquid-phase fluid supply assembly 120110 includes a first driving device 121 and an energy storage device 122. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 is configured to store potential energy or release the stored potential energy. The first controller is configured to: during performance of a chromatographic analysis test for one sample, control the first driving device 121 to drive the liquid-phase fluid to flow so as to elute the sample solution adsorbed on the chromatographic column 150, and control the energy storage device 122 to store potential energy under the pressure of the liquid-phase fluid; and after completion of the chromatographic analysis test for one sample and before performance of a chromatographic analysis test for a next sample, control the energy storage device 122 to release the potential energy stored during performance of the chromatographic analysis test for one sample, so as to assist in driving the liquid-phase fluid to flow toward the directional control valve 130 and the chromatographic column 150.

As an implementation, the liquid-phase fluid supply assembly 120 further includes a locking/releasing device 123. The locking/releasing device 123 is configured to lock and release the energy storage device 122. The locking/releasing device 123 is switchable between a locked state and a released state. In practical applications, when the locking/releasing device 123 is in the released state, the energy storage device 122 may store potential energy under the pressure of the liquid-phase fluid; when the locking/releasing device 123 is in the locked state, the energy storage device 122 is locked, and the potential energy stored in the energy storage device 122 cannot be released; and when the locking/releasing device 123 switches from the locked state to the released state, the potential energy stored in the energy storage device 122 may be released. In this embodiment, an energy storage device 122 and a locking/releasing device 123 are provided in the liquid-phase fluid supply assembly 120; the locking/releasing device 123 is configured to release a potential energy storage and release assembly 1222 of the energy storage device 122 when in a released state to allow the energy storage device 122 to store potential energy and release potential energy under the pressure of the liquid-phase fluid; and the locking/releasing device 123 is configured to lock the potential energy storage and release assembly 1222 when in a locked state so as to prevent the energy storage device 122 from releasing the stored potential energy, such that the liquid-phase fluid supply assembly 120 has the function of storing potential energy and releasing potential energy in addition to the function of supplying the liquid-phase fluid at a certain pressure.

As an implementation, the energy storage device 122 includes a housing 1221 and a potential energy storage and release assembly 1222, the potential energy storage and release assembly 1222 is at least partially disposed within the housing 1221 and that partitions the interior of the housing 1221 to form a liquid chamber 1223 through which the liquid-phase fluid flows, and the potential energy storage and release assembly 1222 is at least partially movable relative to the housing 1221 to change the volume of the liquid chamber 1223 and to store potential energy or release the stored potential energy.

As an implementation, the locking/releasing device 123 is switchable between a locked state and a released state. In the locked state, the locking/releasing device 123 exerts an acting force on the potential energy storage and release assembly 1222 to lock the potential energy storage and release assembly 1222, so as to prevent the potential energy storage and release assembly 1222 from moving relative to the housing 1221 and thus prevent the potential energy storage and release assembly 1222 from releasing the stored potential energy; and in the released state, the potential energy storage and release assembly 1222 is movable relative to the housing 1221 under the pressure of the liquid-phase fluid to store potential energy, and when the locking/releasing device 123 removes the acting force exerted on the potential energy storage and release assembly 1222, the potential energy storage and release assembly 1222 is released, to allow the potential energy storage and release assembly 1222 to move relative to the housing 1221 so as to allow the potential energy storage and release assembly 1222 to release the stored potential energy. In this embodiment, the locking/releasing device 123 directly exerts an acting force on the potential energy storage and release assembly 1222 to lock the potential energy storage and release assembly 1222.

As an implementation, controlling the energy storage device 122 to store potential energy under the pressure of the liquid-phase fluid includes: controlling the locking/releasing device 123 to be in a released state to allow the energy storage device 122 to store potential energy under the pressure of the liquid-phase fluid. After completion of the chromatographic analysis test for one sample and before performance of a chromatographic analysis for a next sample, controlling the energy storage device 122 to release the potential energy stored during performance of the chromatographic analysis test for one sample includes: after completion of the chromatographic analysis test for one sample, controlling the locking/releasing device 123 to switch from the released state to the locked state so as to prevent the energy storage device 122 from releasing the stored potential energy, and controlling the first driving device 121 to stop driving the liquid-phase fluid to flow; and after the locking/releasing device 123 switches to the locked state, and during performance of the chromatographic analysis test for the next sample, controlling the locking/releasing device 123 to switch from the locked state to the released state such that the energy storage device 122 releases the potential energy stored during performance of the chromatographic analysis test for one sample. In this embodiment, after completion of the chromatographic analysis test for one sample, the locking/releasing device 123 switches from the released state to the locked state so as to prevent the energy storage device 122 from releasing the stored potential energy, thereby achieving the effects of storing energy and holding pressure, such that during performance of the chromatographic analysis test for the next sample, the energy stored in the previous sample can be utilized to assist in rapid pressure buildup of the liquid-phase fluid. Of course, in practical applications, as an alternative embodiment, when two adjacent samples are injected continuously or at a small interval (e.g., less than a first preset period described below), pressure holding can also be achieved by controlling the first driving device 121 to maintain the liquid phase fluid to flow, without requiring the locking/releasing device 123 to switch from the released state to the locked state. However, this may result in large consumption of the liquid-phase fluid.

As a first implementation of the liquid chromatography device in which the liquid chromatography device is a liquid chromatography analyzer 100, the liquid chromatography analyzer 100 includes a sample supply assembly 110, a liquid-phase fluid supply assembly 120, a directional control valve 130, a sample solution preparation channel 140, a chromatographic column 150, and a detector 160. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to aspirate the blood sample from the sample container and to supply a sample solution prepared from at least part of the aspirated blood sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150. The liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The potential energy storage and release assembly 1222 is at least partially movable relative to the housing 1221 to change a volume of the liquid chamber 1223 and to store potential energy or release the stored potential energy. The locking/releasing device 123 is switchable between a locked state and a released state. In the locked state, the locking/releasing device 123 exerts an acting force on the potential energy storage and release assembly 1222 to lock the potential energy storage and release assembly 1222, so as to prevent the potential energy storage and release assembly 1222 from moving relative to the housing 1221 and thus prevent the potential energy storage and release assembly 1222 from releasing the stored potential energy; and in the released state, the potential energy storage and release assembly 1222 is movable relative to the housing 1221 under the pressure of the liquid-phase fluid to store potential energy, and when the locking/releasing device 123 removes the acting force exerted on the potential energy storage and release assembly 1222, the potential energy storage and release assembly 1222 is released, to allow the potential energy storage and release assembly 1222 to move relative to the housing 1221 so as to allow the potential energy storage and release assembly 1222 to release the stored potential energy. The control assembly 500 is further configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device 123 to switch from the released state to the locked state so as to prevent the potential energy storage and release assembly 1222 from moving relative to the housing 1221 and thus prevent the potential energy storage and release assembly 1222 from releasing the stored potential energy, and control the first driving device 121 to stop driving the liquid-phase fluid to flow; and after the locking/releasing device 123 switches to the locked state, if the information indicating that a chromatographic analysis test is required for a blood sample is received, control the locking/releasing device 123 to switch from the locked state to the released state such that the potential energy storage and release assembly 1222 is movable relative to the housing 1221 to release the stored potential energy, so as to assist in driving the liquid-phase fluid to flow toward the directional control valve 130 and the chromatographic column 150. The working principle and other aspects of the liquid chromatography analyzer 100 can refer to the above description of the liquid chromatography analyzer 100 in the sample analysis system 10, which will not be described in detail herein.

The liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

As an implementation, the hemolysis solution includes at least one of: a surfactant-containing hemolytic agent that lyses and ruptures red blood cells in the sample by means of the surfactant, and deionized water, pure water or distilled water that swells and ruptures red blood cells in the sample under the action of osmotic pressure. The surfactant-containing hemolytic agent enables the red blood cells in the sample to release hemoglobin mainly by lysing the red blood cells, such that the whole blood sample can be treated into a sample solution. The deionized water, pure water or distilled water mainly swells and ruptures the red blood cells in the whole blood sample under the action of osmotic pressure, causing the red blood cells in the sample to release hemoglobin, such that the whole blood sample can also be treated into a sample solution.

As an implementation, when the hemolysis solution is a surfactant-containing hemolytic agent that lyses and ruptures red blood cells in the sample by means of the surfactant, the sample delivery liquid path 113143 is configured to aspirate the hemolysis solution from a hemolytic agent container 40 to the first reaction container 112.

As a second implementation of the liquid chromatography device in which the liquid chromatography device is a liquid chromatography-mass spectrometry analyzer 101 and the detector 160 is a mass spectrometer detector 160, the liquid chromatography device includes a chromatography device 1010 and a pretreatment device 1011. The chromatography device 1010 includes a sample supply assembly 110, a liquid-phase fluid supply assembly 120, a directional control valve 130, a sample solution preparation channel 140, and a chromatographic column 150. The sample pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

As an implementation, the liquid chromatography-mass spectrometry analyzer 101 further includes a sample storage device 1012. The sample storage device 1012 is configured to receive the sample container loaded with the sample so as to load the sample. The pretreatment device 1011 is configured to pre-treat the sample from the sample container of the sample storage device 1012 to obtain a sample solution.

As a first implementation of the pretreatment device 1011 using magnetic separation, the pretreatment device 1011 pre-treats the sample by means of magnetic separation. The pretreatment device 1011 includes a magnetic separation component 1011a, a magnetic bead elution component 1011b, a reagent dispensing component 1011d, and a pipetting component 1011e. The pipetting component 1011e is configured to aspirate at least part of the sample from the sample container from the sample storage device 1012 and to dispense all or part of the aspirated sample to the second reaction container. The reagent dispensing component 1011d is configured to dispense both an internal standard reagent and a first magnetic bead reagent to the second reaction container. The magnetic separation component 1011a is configured to perform magnetic separation washing on a first mixed solution containing at least the sample, the internal standard reagent and the first magnetic bead reagent in the second reaction container to obtain a first clear solution and a first magnetic bead solution, and to aspirate and remove the first clear solution in the second reaction container. The magnetic bead elution component 1011b is configured to elute the first magnetic bead solution in the second reaction container to obtain a sample solution. The sample supply assembly 110 is configured to aspirate at least part of the sample solution from the second reaction container and transfer all or part of the aspirated sample solution to the sample solution preparation channel 140. The reagent dispensing component 1011d and the pipetting component 1011e are either two separate components or the same component. In this embodiment, magnetic beads are configured to capture a target analyte in the first magnetic bead solution.

As an implementation, the pretreatment device 1011 further includes a reagent storage component 1011c, the reagent dispensing component 1011d is configured to aspirate at least part of the first magnetic bead solution from a sample solution container from the reagent storage component 1011c and to dispense all or part of the aspirated first magnetic bead solution to the second reaction container.

As an implementation, the pretreatment device 1011 further includes a reaction container supply component 1011f and a reaction container transfer component. The reaction container supply component 1011f is configured to supply a second reaction container. The reaction container transfer component is configured to transfer the second reaction container from the reaction container supply component 1011f to the magnetic separation component 1011a and the magnetic bead elution component 1011b.

As an implementation, the pretreatment device 1011 further includes a mixing component; and the first controller is further configured to control the pretreatment device 1011 to perform a pretreatment operation including: controlling the pipetting component 1011e to aspirate at least part of the sample from the sample container from the sample storage device 1012 and to dispense all or part of the aspirated sample to the second reaction container; controlling the reagent dispensing component 1011d to dispense an internal standard reagent to the second reaction container; controlling the mixing component to mix the sample and the internal standard reagent in the second reaction container to obtain a second mixed solution; controlling the reagent dispensing component 1011d to dispense the first magnetic bead reagent into the second mixed solution in the second reaction container to obtain a first mixed solution; controlling the magnetic separation component 1011a to perform magnetic separation washing on the first mixed solution in the second reaction container to obtain a first clear solution and a first magnetic bead solution; controlling the magnetic separation component 1011a to aspirate and remove the first clear solution in the second reaction container; and controlling the magnetic bead elution component 1011b to elute the first magnetic bead solution in the second reaction container to obtain a sample solution.

As a second implementation of the pretreatment device 1011 using magnetic separation, the pretreatment device 1011 pre-treats the sample by means of magnetic separation. The pretreatment device 1011 includes a magnetic separation component 1011a, a reagent dispensing component 1011d, and a pipetting component 1011e. The pipetting component 1011e is configured to aspirate at least part of the sample from the sample container from the sample storage device 1012 and to dispense all or part of the aspirated sample to the second reaction container. The reagent dispensing component 1011d is configured to dispense both an internal standard reagent and a second magnetic bead reagent to the second reaction container. The magnetic separation component 1011a is configured to perform magnetic separation washing on a third mixed solution containing at least the sample, the internal standard reagent and the second magnetic bead reagent in the second reaction container to obtain a second clear solution and a second magnetic bead solution. The second clear solution serves as a sample solution. The sample supply assembly 110 is configured to aspirate at least part of the sample solution from the second reaction container and transfer all or part of the aspirated sample solution to the sample solution preparation channel 140. The reagent dispensing component 1011d and the pipetting component 1011e are either two separate components or the same component. In this embodiment, magnetic beads are configured to capture impurities, and the second clear solution contains a target analyte.

This example further provides a control method for a liquid chromatography device. The control method for the liquid chromatography device is specifically a control method for a liquid chromatography analyzer 100. The control method includes the steps of: within a first preset period after completion of the chromatographic analysis test for one blood sample, if no information indicating that a chromatographic analysis test is required for another blood sample is received, control the locking/releasing device 123 to switch from the released state to the locked state so as to prevent the potential energy storage and release assembly 1222 from releasing the stored potential energy, and control the first driving device 121 to stop driving the liquid-phase fluid to flow; and after the locking/releasing device 123 switches to the locked state, if the information indicating that a chromatographic analysis test is required for a blood sample is received, control the locking/releasing device 123 to switch from the locked state to the released state such that the potential energy storage and release assembly 1222 releases the stored potential energy, so as to assist in driving the liquid-phase fluid to flow toward the chromatographic column 150.

As an implementation, the control method further includes: before performance of a first chromatographic analysis test after startup of the liquid chromatography analyzer 100, control the first driving device 121 to be activated and operate for a third preset period to cause the pressure of the liquid-phase fluid flowing toward the chromatographic column 150 to reach the target pressure value or the target pressure range; and during performance of a chromatographic analysis test, control the first driving device 121 to drive the liquid-phase fluid to flow at the target pressure value or at a pressure value within the target pressure range, so as to elute the sample solution adsorbed on the chromatographic column 150.

As an implementation, in the control method, if the information indicating that a chromatographic analysis test is required for a blood sample is received, controlling the locking/releasing device 123 to switch from the locked state to the released state includes: controlling the first driving device 121 to be activated and operate for a second preset period to cause a pressure of the liquid-phase fluid flowing toward the chromatographic column 150 to be greater than zero and less than a target pressure value or less than a lower limit value of a target pressure range, and then controlling the locking/releasing device 123 to switch from the locked state to the released state.

As an implementation, the control method further includes: after the locking/releasing device 123 is controlled to switch from the locked state to the released state, controlling the first driving device 121 to continue to operate for a fourth preset period to cause the pressure of the liquid-phase fluid flowing toward the chromatographic column 150 to reach substantially the target pressure value or the target pressure range, and then controlling the directional control valve 130 to switch to a state in which the liquid-phase fluid supply assembly 120, the sample solution preparation channel 140 and the chromatographic column 150 are in communication with one another, such that the liquid-phase fluid supply assembly 120 drives the sample solution in the sample solution preparation channel 140 to be delivered to the chromatographic column 150 by means of the liquid-phase fluid. The sum of the second preset period and the fourth preset period is less than the third preset period.

The specific principles and implementations of the control method according to this example are both similar to those described above of the sample analysis system 10, which will not be described in detail herein.

This example further provides a computer-readable storage medium having a computer program stored thereon, the computer program, when performed by a processor (e.g., the control assembly 500), causing the processor to implement the steps of the control method for the liquid chromatography analyzer 100 as described above. The computer-readable storage medium may be an internal storage unit of the sample analysis system 10 described above, such as a hard disk or a memory of the sample analysis system 10. Alternatively, the computer-readable storage medium may also be an external storage apparatus of the sample analysis system 10, such as a removable hard disk, a smart media card (SMC), a secure digital (SD) card, or a flash card equipped on the sample analysis system 10.

In this example, when the liquid chromatography analyzer 100 stops measurement, the elastic potential energy within the energy storage device 122 is stored in means of an electromechanical structure (a structure composed of the motor, the transmission component 1233 and the locking components 1232), the pressure in the liquid path system instantly drops to zero pressure or near zero pressure, such that the liquid-phase fluid stops flowing to achieve rapid pressure relief, and the liquid-phase fluid is stored within the energy storage device 122 and/or the pipeline. When the measurement is activated next time, the electromechanical structure rapidly releases the elastic potential energy within the energy storage device 122, and the elastic potential energy rapidly restores deformation to press the liquid-phase fluid to flow rapidly, thereby achieving rapid pressure buildup and reducing consumption of the liquid-phase fluid during the pressure buildup process. Since the liquid-phase fluid is also stored within the energy storage device 122 during the process of locking and storing the potential energy, the consumption of the liquid-phase fluid is further reduced.

This example has the following beneficial effects: (1) the effects of rapid pressure buildup and saving of the liquid-phase fluid are achieved through the storage and release of potential energy; (2) the liquid chromatography analyzer 100 can achieve an immediate-to-test effect in a cascade system or a laboratory automation line; and (3) the energy storage device 122 is locked under a locking force by the self-locking of the screw drive pair, the torque of the motor only needs be sufficient to cause the locking component 1232 to move in a no-load motion, without the need to overcome the force of the elastic element 1222b, such that the output torque of the motor may be set to be far less than a torque required to pull the deformed elastic element 1222b, resulting in a simple structure and low cost.

### Second example:

A sample analysis system 10, a liquid chromatography device, and a control method for a liquid chromatography device according to this example mainly differ from the first example in that the focus of protection is different, which is specifically embodied in that the first example focuses on protecting the control timing of the locking/releasing device 123 for pressure re-buildup in an intermittent sample injection scenario, whereas this example focuses on protecting the immediate-to-test scheme in an intermittent sample injection scenario.

Specifically, the sample analysis system 10 according to this example includes a sample input apparatus 400, a liquid chromatography analyzer 100, a hematology analyzer 200, a sample transfer apparatus 300, an information acquisition apparatus 600, and a control assembly 500. The sample input apparatus 400 is configured at least to receive a sample container loaded with a blood sample, so as to load the blood sample. The liquid chromatography analyzer 100 is configured to aspirate a blood sample from the sample container and to perform chromatographic analysis on at least part of the aspirated blood sample. The hematology analyzer 200 is configured to aspirate a blood sample from the sample container and to perform hematology analysis on at least part of the aspirated blood sample. The sample transfer apparatus 300 includes a first transfer track 310 and a second transfer track 320. The first transfer track 310 is configured to transfer the sample container from the sample input apparatus 400 to the liquid chromatography analyzer 100, and the second transfer track 320 is configured to transfer the sample container from the sample input apparatus 400 to the hematology analyzer 200. The first transfer track 310 and the second transfer track 320 are integrally formed or connected to each other. The information acquisition apparatus 600 is configured to acquire information indicative of a type of test for the blood sample in the sample container. The control assembly 500 is configured to: determine the type of test for the blood sample in the sample container based on the information fed back by the information acquisition apparatus 600 indicative of the type of test for the blood sample in the sample container; and control, based on the type of test for the blood sample in the sample container, the sample transfer apparatus 300 to transfer the sample container to the liquid chromatography analyzer 100 and/or the hematology analyzer 200 for sample aspiration.

As an implementation, the liquid chromatography analyzer 100 includes a sample supply assembly 110, a liquid-phase fluid supply assembly 120, a directional control valve 130, a sample solution preparation channel 140, a chromatographic column 150, and a detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another, the chromatographic column 150 being connected between the directional control valve 130 and the detector 160. The sample supply assembly 110 is configured to aspirate the blood sample from the sample container and to supply a sample solution prepared from at least part of the aspirated blood sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150.

As an implementation, the liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The potential energy storage and release assembly 1222 is at least partially movable relative to the housing 1221 to change a volume of the liquid chamber 1223 and to store potential energy or release the stored potential energy. The locking/releasing device 123 is switchable between a locked state and a released state.

As an implementation, the control assembly 500 is further configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device 123 to switch from the released state to the locked state so as to prevent the potential energy storage and release assembly 1222 from moving relative to the housing 1221 and thus prevent it from releasing the stored potential energy, and control the first driving device 121 to stop driving the liquid-phase fluid to flow; and when the locking/releasing device 123 is in the locked state and the directional control valve 130 is in the first communication state, if the information indicating that a chromatographic analysis test is required for a blood sample is received, control the sample supply assembly 110 to perform following sample solution preparation operation: aspirating a blood sample from the sample container and dispensing the blood sample to a first reaction container 112, and delivering a sample solution prepared from at least the blood sample and a hemolytic agent in the first reaction container 112 to the sample preparation channel via the directional control valve 130. During performance of the sample solution preparation operation by the sample supply assembly 110, the first driving device 121 is controlled to be activated and operate, and the locking/releasing device 123 is controlled to switch from the locked state to the released state such that the potential energy storage and release assembly 1222 moves relative to the housing 1221 to release the stored potential energy, so as to assist in driving the liquid-phase fluid to flow toward the directional control valve 130 and the chromatographic column 150. After completion of the sample solution preparation operation by the sample supply assembly 110, controlling the directional control valve 130 to switch from the first communication state to the second communication state such that the liquid-phase fluid supply assembly 120 drives the sample solution in the sample solution preparation channel 140 to be delivered to the chromatographic column 150 by means of the liquid-phase fluid.

As an implementation, the control assembly 500 is further configured to: control the sample supply assembly 110 to complete, within a fifth preset period, following sample solution preparation operation: aspirating a blood sample from the sample container and dispensing the blood sample to a first reaction container 112, and delivering a sample solution prepared from at least the blood sample and a hemolytic agent in the first reaction container 112 to the sample preparation channel via the directional control valve 130; when the locking/releasing device 123 is in the locked state, if the information indicating that a chromatographic analysis test is required for a blood sample is received, control the liquid-phase fluid supply assembly 120 to complete, within a sixth preset period, following pressure buildup operation: controlling the first driving device 121 to be activated and operate, and controlling the locking/releasing device 123 to switch from the locked state to the released state such that a pressure at which the liquid-phase fluid supply assembly 120 drives the liquid-phase fluid to flow toward the chromatographic column 150 reaches a target pressure value or a target pressure range within the fifth preset period; and during performance of a chromatographic analysis test, control the first driving device 121 to drive the liquid-phase fluid to flow at the target pressure value or at a pressure value within the target pressure range, so as to elute the sample solution adsorbed on the chromatographic column 150. The sixth preset period is less than the fifth preset period.

As an implementation, the first controller is further configured to: before performance of a first chromatographic analysis test after startup of the liquid chromatography analyzer 100, control the first driving device 121 to be activated and operates for a third preset period to cause the pressure of the liquid-phase fluid flowing toward the chromatographic column 150 to reach the target pressure value or the target pressure range. The sixth preset period is less than the third preset period.

In addition to the difference described above, the other aspects of the sample analysis system 10, the liquid chromatography device, and the control method for a liquid chromatography device according to this example can refer to the first example, which will not be described in detail herein.

### Third example:

A sample analysis system 10, a liquid chromatography device, and a control method for a liquid chromatography device according to this example mainly differ from those in the first example in that this example focuses on defining a solution in which the energy storage device 122 of the liquid chromatography device stores energy during a chromatographic analysis test on a current sample and releases energy during a chromatographic analysis test on a next sample.

Specifically, a liquid chromatography device according to this example includes a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform analysis on the test solution flowing out of the chromatographic column 150. The liquid-phase fluid supply assembly 120 includes a first driving device 121 and an energy storage device 122. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 is configured to store potential energy or release the stored potential energy. The first controller is configured to: during performance of a chromatographic analysis test for one sample, control the first driving device 121 to drive the liquid-phase fluid to flow so as to elute the sample solution adsorbed on the chromatographic column 150, and control the energy storage device 122 to store potential energy under the pressure of the liquid-phase fluid; and after completion of the chromatographic analysis test for one sample and before performance of a chromatographic analysis test for a next sample, control the energy storage device 122 to release the potential energy stored during performance of the chromatographic analysis test for one sample, so as to assist in driving the liquid-phase fluid to flow toward the directional control valve 130 and the chromatographic column 150.

As an implementation, the liquid-phase fluid supply assembly 120 further includes a locking/releasing device 123. The locking/releasing device 123 is switchable between a locked state and a released state. In the locked state, the locking/releasing device 123 exerts an acting force on the energy storage device 122 to lock the energy storage device 122, so as to prevent the energy storage device 122 from releasing the stored potential energy; and in the released state, the energy storage device 122 is capable of storing potential energy under the pressure of the liquid-phase fluid, and when the locking/releasing device 123 removes the acting force exerted on the energy storage device 122, the energy storage device 122 is released, to allow the energy storage device 122 to release the stored potential energy.

As an implementation, controlling the energy storage device 122 to store potential energy under the pressure of the liquid-phase fluid includes: controlling the locking/releasing device 123 to be in a released state to allow the energy storage device 122 to store potential energy under the pressure of the liquid-phase fluid. After completion of the chromatographic analysis test for one sample and before performance of a chromatographic analysis for a next sample, controlling the energy storage device 122 to release the potential energy stored during performance of the chromatographic analysis test for one sample includes: after completion of the chromatographic analysis test for one sample, controlling the locking/releasing device 123 to switch from the released state to the locked state so as to prevent the energy storage device 122 from releasing the stored potential energy, and controlling the first driving device 121 to stop driving the liquid-phase fluid to flow; and after the locking/releasing device 123 switches to the locked state, and during performance of the chromatographic analysis test for the next sample, controlling the locking/releasing device 123 to switch from the locked state to the released state such that the energy storage device 122 releases the potential energy stored during performance of the chromatographic analysis test for one sample.

As an implementation, after completion of the chromatographic analysis test for one sample, controlling the locking/releasing device 123 to switch from the released state to the locked state so as to prevent the energy storage device 122 from releasing the stored potential energy, and controlling the first driving device 121 to stop driving the liquid-phase fluid to flow include: within a first preset period after completion of the chromatographic analysis test for one sample, if no information indicating that a chromatographic analysis test is required for another sample is received, control the locking/releasing device 123 to switch from the released state to the locked state so as to prevent the energy storage device 122 from releasing the stored potential energy, and control the first driving device 121 to stop driving the liquid-phase fluid to flow. After the locking/releasing device 123 switches to the locked state, and during performance of the chromatographic analysis test for the next sample, controlling the locking/releasing device 123 to switch from the locked state to the released state such that the energy storage device 122 releases the potential energy stored during performance of the chromatographic analysis test for one sample includes: after the locking/releasing device 123 switches to the locked state, if the information indicating that a chromatographic analysis test is required for a sample is received, controlling the locking/releasing device 123 to switch from the locked state to the released state such that the energy storage device 122 releases the potential energy stored during performance of the chromatographic analysis test for one sample so as to assist in driving the liquid-phase fluid to flow toward the directional control valve 130 and the chromatographic column 150.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10 including:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer 200 is a hematology analyzer configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

The control method for a liquid chromatography device according to this example includes the steps of: during performance of a chromatographic analysis test on a sample, controlling a first driving device 121 to drive the liquid-phase fluid to elute the sample solution adsorbed on the chromatographic column 150 and prepared from at least the sample, and controlling an energy storage device 122 to store potential energy under the pressure of the liquid-phase fluid; and after completion of the chromatographic analysis test for one sample and before performance of a chromatographic analysis test for a next sample, control the energy storage device 122 to release the potential energy stored during performance of the chromatographic analysis test for one sample, so as to assist in driving the liquid-phase fluid to flow toward the directional control valve 130 and the chromatographic column 150.

As an implementation, controlling the energy storage device 122 to store potential energy under the pressure of the liquid-phase fluid includes: controlling the locking/releasing device 123 to be in a released state to allow the energy storage device 122 to store potential energy under the pressure of the liquid-phase fluid. After completion of the chromatographic analysis test for one sample and before performance of a chromatographic analysis for a next sample, controlling the energy storage device 122 to release the potential energy stored during performance of the chromatographic analysis test for one sample includes: after completion of the chromatographic analysis test for one sample, controlling the locking/releasing device 123 to switch from the released state to the locked state so as to prevent the energy storage device 122 from releasing the stored potential energy, and controlling the first driving device 121 to stop driving the liquid-phase fluid to flow; and after the locking/releasing device 123 switches to the locked state, and during performance of the chromatographic analysis test for the next sample, controlling the locking/releasing device 123 to switch from the locked state to the released state such that the energy storage device 122 releases the potential energy stored during performance of the chromatographic analysis test for one sample.

In addition to the difference described above, the other aspects of the sample analysis system 10, the liquid chromatography device, and the control method for a liquid chromatography device according to this example can refer to the first example and the second example, which will not be described in detail herein.

### Fourth example:

A sample analysis system 10, a liquid chromatography device, and a control method for a liquid chromatography device according to this example mainly differ from the first example in that the manner of the locking/releasing device 123 locking the potential energy storage and release assembly 1222 may be different, which is specifically embodied in that in the first example, the locking/releasing device 123 is configured to lock the potential energy storage and release assembly 1222 by means of exerting an acting force, whereas in this example, the locking/releasing device 123 is configured to lock the potential energy storage and release assembly 1222 by means of abutting.

Specifically, a liquid chromatography device according to this example includes a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150. The liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The potential energy storage and release assembly 1222 is at least partially movable relative to the housing 1221 to change a volume of the liquid chamber 1223 and to store potential energy or release the stored potential energy. The locking/releasing device 123 is switchable between a locked state and a released state. In the locked state, the locking/releasing device 123 abuts against the potential energy storage and release assembly 1222 to lock the potential energy storage and release assembly 1222, so as to prevent it from moving relative to the housing 1221 and thus prevent the potential energy storage and release assembly 1222 from releasing the stored potential energy; and in the released state, the potential energy storage and release assembly 1222 is movable relative to the housing 1221 under the pressure of the liquid-phase fluid to store potential energy, and when the locking/releasing device 123 is disengaged from the potential energy storage and release assembly 1222, the potential energy storage and release assembly 1222 is released, to allow the potential energy storage and release assembly 1222 to move relative to the housing 1221 so as to allow the potential energy storage and release assembly 1222 to release the stored potential energy. The first controller is configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one sample, if no information indicating that a chromatographic analysis test is required for another sample is received, control the locking/releasing device 123 to switch from the released state to the locked state so as to prevent the potential energy storage and release assembly 1222 from moving relative to the housing 1221 and thus prevent it from releasing the stored potential energy, and control the first driving device 121 to stop driving the liquid-phase fluid to flow; and after the locking/releasing device 123 switches to the locked state, if the information indicating that a chromatographic analysis test is required for a sample is received, control the locking/releasing device 123 to switch from the locked state to the released state such that the potential energy storage and release assembly 1222 is movable relative to the housing 1221 to release the stored potential energy, so as to assist in driving the liquid-phase fluid to flow toward the directional control valve 130 and the chromatographic column 150.

As an implementation, the potential energy storage and release assembly 1222 has an engagement portion 1222d protruding from the housing 1221, the locking/releasing device 123 locks the potential energy storage and release assembly 1222 by means of abutting against and restricting the engagement portion 1222d, and the locking/releasing device 123 releases the potential energy storage and release assembly 1222 by means of disengaging from the engagement portion 1222d.

As an implementation, the locking/releasing device 123 includes a power component 1231, a locking component 1232, and a transmission component 1233 in transmission connection between the power component 1231 and the locking component 1232. The transmission component 1233 has a self-locking capability. When the locking/releasing device 123 is in the locked state, the power component 1231 is in a stopped state, and the locking component 1232 is maintained in the locked position by means of a locking force generated by self-locking of the transmission component 1233 to abut against and lock the potential energy storage and release assembly 1222.

As an implementation, the first controller is further configured to: control the sample supply assembly 110 to complete, within a fifth preset period, following sample solution preparation operation: aspirating a sample from the sample container and dispensing the sample to a first reaction container 112, and delivering a sample solution prepared from at least the sample and a hemolytic agent in the first reaction container 112 to the sample preparation channel via the directional control valve 130; when the locking/releasing device 123 is in the locked state, if the information indicating that a chromatographic analysis test is required for a sample is received, control the liquid-phase fluid supply assembly 120 to complete, within a sixth preset period, following pressure buildup operation: controlling the first driving device 121 to be activated and operate, and controlling the locking/releasing device 123 to switch from the locked state to the released state such that a pressure at which the liquid-phase fluid supply assembly 120 drives the liquid-phase fluid to flow toward the chromatographic column 150 reaches a target pressure value or a target pressure range within the fifth preset period; and during performance of a chromatographic analysis test, control the first driving device 121 to drive the liquid-phase fluid to flow at the target pressure value or at a pressure value within the target pressure range, so as to elute the sample solution adsorbed on the chromatographic column 150. The sixth preset period is less than the fifth preset period.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10. The sample analysis system 10 includes:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer is a hematology analyzer 200 configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

In addition to the difference described above, the other aspects of the sample analysis system 10, the liquid chromatography device, and the control method for a liquid chromatography device according to this example can refer to the first example to the third example, which will not be described in detail herein.

### Fifth example:

A sample analysis system 10, a liquid chromatography device, and a control method for a liquid chromatography device according to this example mainly differ from the first example in that the manner of the locking/releasing device 123 locking the potential energy storage and release assembly 1222 may be different, which is specifically embodied in that in the first example, the locking/releasing device 123 is configured to lock the potential energy storage and release assembly 1222 by means of exerting an acting force, whereas in this example, the locking/releasing device 123 is configured to lock the potential energy storage and release assembly 1222 in a non-liquid-path-locking manner.

Specifically, a liquid chromatography device according to this example includes a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150. The liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The potential energy storage and release assembly 1222 is at least partially movable relative to the housing 1221 to change a volume of the liquid chamber 1223 and to store potential energy or release the stored potential energy. The locking/releasing device 123 is switchable between a locked state and a released state. In the locked state, the locking/releasing device 123 locks the potential energy storage and release assembly 1222 in a non-liquid-path-locking manner so as to prevent the potential energy storage and release assembly from moving relative to the housing 1221 and thus prevent the potential energy storage and release assembly 1222 from releasing the stored potential energy; and in the released state, the potential energy storage and release assembly 1222 is movable relative to the housing 1221 under the pressure of the liquid-phase fluid to store potential energy, and the locking/releasing device 123 releases the potential energy storage and release assembly 1222 in a non-liquid-path-conducting manner to allow the potential energy storage and release assembly 1222 to release the stored potential energy. The first controller is configured to: during performance of a chromatographic analysis test, control the first driving device 121 to drive the liquid-phase fluid to flow so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one sample, if no information indicating that a chromatographic analysis test is required for another sample is received, control the locking/releasing device 123 to switch from the released state to the locked state so as to prevent the potential energy storage and release assembly 1222 from moving relative to the housing 1221 and thus prevent it from releasing the stored potential energy, and control the first driving device 121 to stop driving the liquid-phase fluid to flow; and after the locking/releasing device 123 switches to the locked state, if the information indicating that a chromatographic analysis test is required for a sample is received, control the locking/releasing device 123 to switch from the locked state to the released state such that the potential energy storage and release assembly 1222 is movable relative to the housing 1221 to release the stored potential energy, so as to assist in driving the liquid-phase fluid to flow toward the directional control valve 130 and the chromatographic column 150.

As an implementation, the potential energy storage and release assembly 1222 has an engagement portion 1222d protruding from the housing 1221, the locking/releasing device 123 locks the potential energy storage and release assembly 1222 by means of abutting against and restricting the engagement portion 1222d, and the locking/releasing device 123 releases the potential energy storage and release assembly 1222 by means of disengaging from the engagement portion 1222d.

As an implementation, the locking/releasing device 123 includes a power component 1231, a locking component 1232, and a transmission component 1233 in transmission connection between the power component 1231 and the locking component 1232. The transmission component 1233 has a self-locking capability. When the locking/releasing device 123 is in the locked state, the power component 1231 is in a stopped state, and the locking component 1232 is maintained in the locked position by means of a locking force generated by self-locking of the transmission component 1233 to abut against and lock the potential energy storage and release assembly 1222.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10. The sample analysis system 10 includes:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer is a hematology analyzer 200 configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

In addition to the difference described above, the other aspects of the sample analysis system 10, the liquid chromatography device, and the control method for a liquid chromatography device according to this example can refer to the first example to the fourth example, which will not be described in detail herein.

### Sixth example:

Referring to FIGS. 1 to 4 and FIG. 12, a sample analysis system 10, a liquid chromatography device, and a control method for a liquid chromatography device according to this example mainly differ from the first example in that the focus of protection is different and in that the manner of locking the energy storage device 122 is different, which is specifically embodied in that the first example focuses on a solution protecting a solution in which the locking/releasing device 123 exerts an acting force to lock the potential energy storage and release assembly 1222 and removes the acting force to achieve rapid pressure buildup, whereas this example focuses on protecting a solution in which the pressure of the liquid-phase fluid is set during locking and pressure buildup and the energy storage device 122 may be locked in a liquid-path locking manner.

Specifically, a liquid chromatography device according to this example includes a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150.

As an implementation, the liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The housing 1221 is provided with a liquid inlet 1221a for the liquid-phase fluid to flow into the liquid chamber 1223 and a liquid outlet 1221b for the liquid-phase fluid to flow out of the liquid chamber 1223. The potential energy storage and release assembly 1222 is at least partially movable relative to the housing 1221 to change the volume of the liquid chamber 1223 and to store potential energy or release the stored potential energy. The locking/releasing device 123 is switchable between a locked state and a released state. in the locked state, the locking/releasing device 123 prevents the potential energy storage and release assembly 1222 from releasing the stored potential energy; and in the released state, the locking/releasing device 123 allows the potential energy storage and release assembly 1222 to store potential energy and release the stored potential energy.

As an implementation, the first controller is configured to: during performance of a chromatographic analysis test, control the first driving device 121 to drive the liquid-phase fluid to flow at a target pressure value or at a pressure value within a target pressure range, so as to elute the sample solution adsorbed on the chromatographic column 150, and control the locking/releasing device 123 to be in the released state to allow the potential energy storage and release assembly 1222 to move relative to the housing 1221 under the pressure of the liquid-phase fluid, so as to store potential energy; within a first preset period after completion of the chromatographic analysis test for one sample, if no information indicating that a chromatographic analysis test is required for another sample is received, control the locking/releasing device 123 to switch from the released state to the locked state so as to prevent the potential energy storage and release assembly 1222 from moving relative to the housing 1221 and thus prevent it from releasing the stored potential energy, and control the first driving device 121 to stop driving the liquid-phase fluid to flow to maintain a pressure of the liquid-phase fluid at the liquid outlet 1221b at a first pressure value; and when the locking/releasing device 123 is in the locked state, if the information indicating that a chromatographic analysis test is required for a sample is received, control the locking/releasing device 123 to switch from the locked state to the released state such that the potential energy storage and release assembly 1222 is movable relative to the housing 1221 to release the stored potential energy, so as to assist in driving the liquid-phase fluid to the directional control valve 130 and the chromatographic column 150. The first pressure value is substantially equal to the target pressure value or is within the target pressure range, or the first pressure value is substantially equal to zero.

As an implementation, if the information indicating that a chromatographic analysis test is required for a sample is received, controlling the locking/releasing device 123 to switch from the locked state to the released state includes: controlling the first driving device 121 to be activated and operate for a second preset period to cause a pressure of the fluid flowing toward the chromatographic column 150 to reach the target pressure value or the target pressure range, and then controlling the locking/releasing device 123 to switch from the locked state to the released state; after the first driving device 121 is activated and operates for a second preset period, and during the process of switching the locking/releasing device 123 from the locked state to the released state, the pressure value of the liquid-phase fluid at the liquid outlet 1221b is a second pressure value that is greater than the target pressure value or greater than an upper limit value of the target pressure range; and after the locking/releasing device 123 switches from the locked state to the released state, the pressure value of the liquid-phase fluid at the liquid outlet 1221b is a third pressure value that is substantially equal to the target pressure value or falls within the target pressure range.

As an implementation, the control assembly 500 is further configured to: after the locking/releasing device 123 is controlled to switch from the locked state to the released state, control the first driving device 121 to continue to operate for a fourth preset period to cause the pressure of the liquid-phase fluid flowing toward the chromatographic column 150 to reach substantially the target pressure value or the target pressure range, and then control the directional control valve 130 to switch to the second communication state such that the liquid-phase fluid supply assembly 120 drives the sample solution in the sample solution preparation channel 140 to be delivered to the chromatographic column 150 by means of the liquid-phase fluid. The sum of the second preset period and the fourth preset period is less than the third preset period.

As an implementation, the locking/releasing device 123 includes a two-way valve 1235 connected between the energy storage device 122 and the directional control valve 130; the locking/releasing device 123 being in the locked state refers to the two-way valve 1235 being in a closed state; the locking/releasing device 123 being in the released state refers to the two-way valve 1235 being in an open state; and the first pressure value is substantially equal to the target pressure value or is within the target pressure range. In this embodiment, when the liquid chromatography analyzer 100 stops measurement, the two-way valve 1235 switches to a closed position to preserve the pressure energy between the first driving device 121 and the two-way valve 1235. When the measurement is activated next time, the two-way valve 1235 switches to a conducting state, the pressure between the first driving device 121 and the two-way valve 1235 can be quickly released, thereby enabling rapid pressure buildup and reducing consumption of the liquid-phase fluid during the pressure buildup process. Since the liquid-phase fluid is also retained between the first driving device 121 and the two-way valve 1235 during the pressure preservation process, thereby further reducing the consumption of liquid-phase fluid.

As an implementation, the first pressure value is greater than or equal to 2 MPa and less than or equal to 10 MPa.

As an implementation, the first pressure value is greater than or equal to 4 MPa and less than or equal to 6 MPa.

As an implementation, the second analyzer is a hematology analyzer 200.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10. The sample analysis system 10 includes:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer is a hematology analyzer 200 configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

In addition to the difference described above, the other aspects of the sample analysis system 10, the liquid chromatography device, and the control method for a liquid chromatography device according to this example can refer to the first example to the fifth example, which will not be described in detail herein.

### Seventh example:

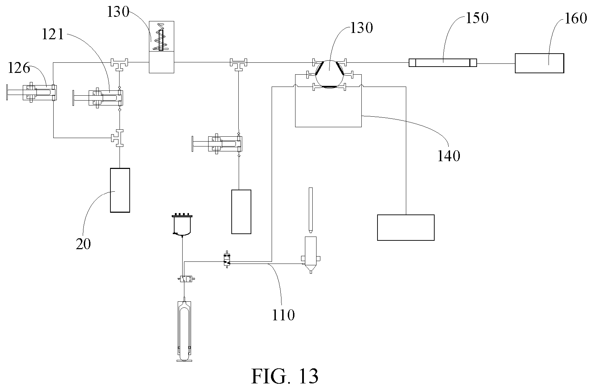

Referring to FIGS. 1 to 4 and FIG. 13, a sample analysis system 10, a liquid chromatography device, and a control method for a liquid chromatography device according to this example mainly differ from the first example in that the energy storage and release manner in the intermittent sample injection scenario is different, which is specifically embodied in that in the first example the energy storage and release is achieved by means of the locking/releasing device 123 locking and releasing the energy storage device 122, whereas in this example the energy storage and release is achieved by means of a second driving device 126 storing the liquid-phase fluid.

Specifically, a liquid chromatography device according to this example includes a sample supply assembly 110, a liquid-phase fluid supply assembly 120, a directional control valve 130, a sample solution preparation channel 140, a chromatographic column 150, a detector 160, and a first controller. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150.

As an implementation, the liquid-phase fluid supply assembly 120 includes a first driving device 121, a second driving device 126, and an energy storage device 122. The first driving device 121 is connected between the liquid-phase fluid container and the energy storage device 122. The first driving device 121 is configured to drive the liquid-phase fluid to flow toward the directional control valve 130 and the chromatographic column 150. The energy storage device 122 is configured to store potential energy when the first driving device 121 drives the liquid-phase fluid to flow. The second driving device 126 is connected to the liquid-phase fluid container and/or the energy storage device 122. The second driving device 126 is configured to aspirate the liquid-phase fluid for storage and to use the stored liquid-phase fluid to assist in driving the liquid-phase fluid to flow toward the directional control valve 130 and the chromatographic column 150.

As an implementation, the first controller is configured to: during performance of a chromatographic analysis test, control the first driving device 121 to drive the liquid-phase fluid to flow so as to elute the sample solution adsorbed on the chromatographic column 150; within the first preset period after completion of the chromatographic analysis test for one sample, if no information indicating that a chromatographic analysis test is required for another sample is received, control the second driving device 126 to be activated and operate to aspirate the liquid-phase fluid and store the liquid-phase fluid in the second driving device 126, and control the first driving device 121 to stop driving the liquid-phase fluid to flow; and after the second driving device 126 stores the liquid-phase fluid, if the information indicating that a chromatographic analysis test is required for a sample is received, control the first driving device 121 to be activated and operate to drive the liquid-phase fluid to flow toward the directional control valve 130 and the chromatographic column 150, and control the second driving device 126 to be activated and operate to assist in driving the liquid-phase fluid to flow toward the directional control valve 130 and the chromatographic column 150 by means of the stored liquid-phase fluid.

As an implementation, the second driving device 126 is connected to the energy storage device 122, and the second driving device 126 being activated and operating to aspirate the liquid-phase fluid and store the liquid-phase fluid in the second driving device 126 includes the second driving device 126 being activated and operating to aspirate the liquid-phase fluid from the energy storage device 122 and store the liquid-phase fluid in the second driving device 126. Alternatively, as an alternative embodiment, the second driving device 126 is connected between the liquid-phase fluid container and the energy storage device 122, and the second driving device 126 being activated and operating to aspirate the liquid-phase fluid and store the liquid-phase fluid in the second driving device 126 includes the second driving device 126 being activated and operating to aspirate the liquid-phase fluid from the liquid-phase fluid container and store the liquid-phase fluid in the second driving device 126.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10. The sample analysis system 10 includes:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer is a hematology analyzer 200 configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

In addition to the difference described above, the other aspects of the sample analysis system 10, the liquid chromatography device, and the control method for a liquid chromatography device according to this example can refer to the first example to the sixth example, which will not be described in detail herein.

### Eighth example:

A sample analysis system 10, a liquid chromatography device, and a control method for a liquid chromatography device according to this example mainly differ from the first example in that this example does not limit the timing control of the pressure buildup process, and only needs to ensure that an energy storage device 122 and a locking/releasing device 123 are provided in the liquid-phase fluid supply assembly 120.

Specifically, a liquid chromatography device according to this example includes a sample supply assembly 110, a liquid-phase fluid supply assembly 120, a directional control valve 130, a sample solution preparation channel 140, a chromatographic column 150, and a detector 160. The chromatographic column 150 is connected between the directional control valve 130 and the detector 160. The directional control valve 130 is switchable between a first communication state in which the directional control valve 130 places the sample supply assembly 110 in communication with the sample solution preparation channel 140 and places the liquid-phase fluid supply assembly 120 in communication with the chromatographic column 150, and a second communication state in which the directional control valve 130 places the liquid-phase fluid supply assembly 120, the sample solution preparation channel 140 and the chromatographic column 150 in communication with one another. The sample supply assembly 110 is configured to supply a sample solution prepared from at least a sample to the sample solution preparation channel 140 via the directional control valve 130. The liquid-phase fluid supply assembly 120 is configured to drive the sample solution in the sample solution preparation channel 140 to be delivered to the chromatographic column 150 by means of a liquid-phase fluid and to drive the liquid-phase fluid to sequentially flow through the directional control valve 130 and the chromatographic column 150. The chromatographic column 150 is configured to adsorb the sample solution and to enable the liquid-phase fluid to elute the sample solution to form a test solution. The detector 160 is configured to perform chromatographic analysis on the test solution flowing out of the chromatographic column 150.

As an implementation, the liquid-phase fluid supply assembly 120 includes a first driving device 121, an energy storage device 122, and a locking/releasing device 123. The first driving device 121 is configured to drive the liquid-phase fluid to flow toward the directional control valve 130 and the chromatographic column 150. The energy storage device 122 is disposed between the first driving device 121 and the directional control valve 130. The energy storage device 122 includes a housing 1221 and a potential energy storage and release assembly 1222. The potential energy storage and release assembly 1222 is at least partially disposed within the housing 1221 and that partitions the interior of the housing 1221 to form a liquid chamber 1223 through which the liquid-phase fluid flows. The potential energy storage and release assembly 1222 is at least partially movable relative to the housing 1221 to change a volume of the liquid chamber 1223 and to store potential energy or release the stored potential energy.

As an implementation, the locking/releasing device 123 is switchable between a locked state and a released state. In the locked state, the locking/releasing device 123 exerts an acting force on the potential energy storage and release assembly 1222 to lock the potential energy storage and release assembly 1222, so as to prevent it from moving relative to the housing 1221 and thus prevent the potential energy storage and release assembly 1222 from releasing the stored potential energy; and in the released state, the potential energy storage and release assembly 1222 is movable relative to the housing 1221 under the pressure of the fluid to store potential energy, and when the locking/releasing device 123 removes the acting force exerted on the potential energy storage and release assembly 1222, the potential energy storage and release assembly 1222 is released, to allow the potential energy storage and release assembly 1222 to move relative to the housing 1221 so as to allow the potential energy storage and release assembly 1222 to release the stored potential energy.

As an implementation, the locking/releasing device 123 exerts an acting force on the potential energy storage and release assembly 1222 by means of abutting against the potential energy storage and release assembly 1222 so as to lock the potential energy storage and release assembly 1222, and the locking/releasing device 123 removes the acting force exerted on the potential energy storage and release assembly 1222 by means of disengaging from the potential energy storage and release assembly 1222 so as to release the potential energy storage and release assembly 1222.

As an implementation, the locking/releasing device 123 exerts the acting force on the potential energy storage and release assembly 1222 to lock the potential energy storage and release assembly 1222 in a non-liquid-path-locking manner, and the locking/releasing device 123 removes the acting force exerted on the potential energy storage and release assembly 1222 to release the potential energy storage and release assembly 1222 in a non-liquid-path-conducting manner.

As an implementation, the liquid chromatography device is the liquid chromatography analyzer 100, the detector 160 is an ultraviolet detector 160 or a fluorescence detector 160, and the sample supply assembly 110 includes a sampling component 111, a first reaction container 112, and a sample delivery liquid path 113. The sampling component 111 is configured to aspirate a sample from the sample container and dispense the sample to the first reaction container 112. The sample delivery liquid path 113 is configured to dispense a hemolysis solution to the first reaction container 112 and to transfer the sample solution prepared from at least the sample and the hemolysis solution in the first reaction container 112 to the sample solution preparation channel 140 via the directional control valve 130.

Alternatively, as another implementation, the liquid chromatography device is a liquid chromatography-mass spectrometry analyzer 101, the detector 160 is a mass spectrometer detector 160, the liquid chromatography device further includes a pretreatment device 1011. The pretreatment device 1011 is configured to pre-treat a sample from the sample container by means of at least one of magnetic separation, solid-phase extraction, liquid-liquid extraction, or protein precipitation so as to obtain the sample solution. The sample supply assembly 110 is configured to transfer at least part of the sample solution treated by the pretreatment device 1011 to the sample solution preparation channel 140.

This example further provides a sample analysis system 10. The sample analysis system 10 includes:
a sample input apparatus 400 configured at least to receive a sample container loaded with a sample, so as to load the sample;
a first analyzer that is the aforementioned liquid chromatography device configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus 300 including a first transfer track 310 and a second transfer track 320, the first transfer track 310 being configured to transfer the sample container from the sample input apparatus 400 to the liquid chromatography device, the second transfer track 320 being configured to transfer the sample container from the sample input apparatus 400 to the cell analyzer, and the first transfer track 310 and the second transfer track 320 being integrally formed or connected to each other; and
a control assembly 500 configured to: control, based on the type of test for the sample in the sample container, the sample transfer apparatus 300 to transfer the sample container to the first analyzer and/or the second analyzer for sample aspiration.

As an implementation, the second analyzer is a hematology analyzer 200 configured at least to aspirate the sample from the sample container and to perform hematology analysis on at least part of the aspirated sample.

As an implementation, the sample analysis system 10 further includes an information acquisition apparatus 600. The information acquisition apparatus 600 is configured to acquire information indicative of a type of test for the sample in the sample container. The control assembly 500 is configured to: determine the type of test for the sample in the sample container based on the information fed back by the information acquisition apparatus 600 indicative of the type of test for the sample in the sample container; and control, based on the type of test for the sample in the sample container, the sample transfer apparatus 300 to transfer the sample container to the first analyzer and/or the second analyzer for sample aspiration.

In addition to the difference described above, the other aspects of the sample analysis system 10, the liquid chromatography device, and the control method for a liquid chromatography device according to this example can refer to the first example to the seventh example, which will not be described in detail herein.

The foregoing description merely relates to the preferred embodiments of the disclosure, and is not intended to limit the scope of patent of the disclosure. All equivalent structural variations made by using the content of the specification and the accompanying drawings of the disclosure from the concept of the disclosure, or the direct/indirect applications of the contents in other related technical fields all fall within the scope of patent protection of the disclosure.

## Claims

1. A sample analysis system, comprising:
a sample input apparatus configured at least to receive a sample container loaded with a blood sample, so as to load the blood sample;
a liquid chromatography analyzer configured to aspirate the blood sample from the sample container and to perform chromatographic analysis on at least part of the aspirated blood sample;
a hematology analyzer configured to aspirate the blood sample from the sample container and to perform hematology analysis on at least part of the aspirated blood sample;
a sample transfer apparatus comprising a first transfer track and a second transfer track, the first transfer track being configured to transfer the sample container from the sample input apparatus to the liquid chromatography analyzer, the second transfer track being configured to transfer the sample container from the sample input apparatus to the hematology analyzer, and the first transfer track and the second transfer track being integrally formed or connected to each other;
an information acquisition apparatus configured to acquire information indicative of a type of test for the blood sample in the sample container; and
a control assembly configured to: determine the type of test for the blood sample in the sample container based on the information fed back by the information acquisition apparatus indicative of the type of test for the blood sample in the sample container; and control, based on the type of test for the blood sample in the sample container, the sample transfer apparatus to transfer the sample container to the liquid chromatography analyzer and/or the hematology analyzer for sample aspiration;
wherein the liquid chromatography analyzer comprises a sample supply assembly, a liquid-phase fluid supply assembly, a directional control valve, a sample solution preparation channel, a chromatographic column, and a detector, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
the sample supply assembly is configured to aspirate the blood sample from the sample container and supply a sample solution prepared from the at least part of the aspirated blood sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device comprising a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device exerts an acting force to the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the liquid-phase fluid to store potential energy and, when the locking/releasing device removes the acting force exerted on the potential energy storage and release assembly, the potential energy storage and release assembly is released, thereby allowing the potential energy storage and release assembly to move relative to the housing so as to allow the potential energy storage and release assembly to release the stored potential energy; and
the control assembly is further configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a blood sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

2. The sample analysis system of claim 1, wherein the potential energy stored and released by the potential energy storage and release assembly is elastic potential energy; or
the potential energy stored and released by the potential energy storage and release assembly is gravitational potential energy; or
the potential energy stored and released by the potential energy storage and release assembly is internal energy of gas.

3. The sample analysis system of claim 1, wherein the locking/releasing device exerts the acting force on the potential energy storage and release assembly by means of abutting against the potential energy storage and release assembly, so as to lock the potential energy storage and release assembly, and the locking/releasing device removes the acting force exerted on the potential energy storage and release assembly by means of disengaging from the potential energy storage and release assembly, so as to release the potential energy storage and release assembly.

4. The sample analysis system of claim 1, wherein the locking/releasing device exerts the acting force on the potential energy storage and release assembly to lock the potential energy storage and release assembly in a non-liquid-path-locking manner, and the locking/releasing device removes the acting force exerted on the potential energy storage and release assembly to release the potential energy storage and release assembly in a non-liquid-path-conducting manner.

5. The sample analysis system of claim 1, wherein the potential energy storage and release assembly has an engagement portion protruding from the housing, and the locking/releasing device exerts the acting force on the potential energy storage and release assembly by means of restraining the engagement portion, so as to lock the potential energy storage and release assembly; and
the locking/releasing device removes the acting force exerted on the potential energy storage and release assembly by means of releasing the engagement portion, so as to release the potential energy storage and release assembly.

6. The sample analysis system of claim 1, wherein the locking/releasing device comprises a power component, a locking component, and a transmission component in transmission connection between the power component and the locking component; and
when the locking/releasing device is in the locked state, the locking component is in a locked position to lock the potential energy storage and release assembly, and in the locked position, the locking component abuts against the potential energy storage and release assembly;
preferably, the transmission component has a self-locking capability, and when the locking/releasing device is in the locked state, the power component is in a stopped state, and the locking component is maintained in the locked position by means of a locking force generated by self-locking of the transmission component, so as to lock the potential energy storage and release assembly.

7. The sample analysis system of claim 6, wherein the power component is a motor;
when the locking/releasing device is in the locked state, the motor is in a stopped state, and the locking component is maintained in the locked position by means of a locking force generated by self-locking of the transmission component, so as to lock the potential energy storage and release assembly;
when the locking/releasing device is in the released state, the motor is in the stopped state, the locking component is in an unlocked position to release the potential energy storage and release assembly, and in the unlocked position, the locking component is disengaged from the potential energy storage and release assembly;
during switching of the locking/releasing device from the locked state to the released state, the motor is in an operating state to drive the locking component to move from the locked position to the unlocked position by means of the transmission component; and
during switching of the locking/releasing device from the released state to the locked state, the motor is in the operating state to drive the locking component to move from the unlocked position to the locked position by means of the transmission component.

8. The sample analysis system of claim 7, wherein the potential energy storage and release assembly has the engagement portion protruding from the housing, the engagement portion having an engagement end face facing the liquid chamber;
the locking component is formed with a locking portion configured to be driven by the power component and the transmission component to move between the locked position and the unlocked position;
controlling the locking/releasing device to switch to the locked state so as to prevent the energy storage device from releasing the stored potential energy, comprises: controlling the power component to be activated and operate to drive the transmission component to cause the locking portion to move from the unlocked position to the locked position, such that the locking portion abuts against the engagement end face, and after the locking portion moves to the locked position, controlling the power component to stop operating, such that the locking portion is maintained in the locked position under an action of the locking force generated by self-locking of the transmission component; and
controlling the locking/releasing device to switch from the locked state to the released state, such that the energy storage device releases the stored potential energy, comprises: controlling the power component to be activated and operate to drive the transmission component to cause the locking portion to move from the locked position to the unlocked position to cause the locking portion to disengage from the engagement end face, such that the potential energy storage and release assembly releases the stored potential energy and moves toward the liquid chamber so as to drive the liquid-phase fluid in the liquid chamber to flow out of the liquid chamber.

9. The sample analysis system of claim 8, wherein the locking/releasing device further comprises a detection component; and the control assembly is further configured to: while the power component drives the transmission component to cause the locking portion to move from the unlocked position to the locked position, acquire feedback information from the detection component, and when it is determined that the locking portion moves to the locked position based on the feedback information from the detection component, control the power component to stop operating;
preferably, the detection component is a reflective photoelectric sensor, a through-beam photoelectric sensor, or a proximity switch.

10. The sample analysis system of claim 8, wherein the potential energy stored and released by the potential energy storage and release assembly is elastic potential energy;
the potential energy storage and release assembly comprises a diaphragm, an elastic element, and a guide rod, the diaphragm being disposed within the housing and fitting with an inner wall of the housing to form the liquid chamber, one end of the guide rod being connected to the diaphragm, the other end of the guide rod protruding from the housing and forming the engagement portion, and the elastic element being located within the housing and sleeved on the guide rod;
the locking/releasing device being in the locked state comprises: the locking portion abutting against the engagement portion to lock the engagement portion, such that the elastic element stores the elastic potential energy; and
the locking/releasing device being in the released state comprises: the locking portion being disengaged from the engagement portion to release the engagement portion, so as to allow the elastic element to release the elastic potential energy.

11. The sample analysis system of claim 10, wherein the elastic element has a stiffness greater than or equal to 500 N/mm and less than or equal to 30,000 N/mm; and/or
the elastic element comprises at least a pair of disc spring stacks.

12. The sample analysis system of any one of claims 6 to 11, wherein the transmission component comprises a screw drive pair that has a lead angle less than an equivalent friction angle; and/or
the transmission component comprises a screw drive pair that is a trapezoidal screw drive pair.

13. The sample analysis system of any one of claims 1 to 11, wherein if information indicating that a chromatographic analysis test is required for a blood sample is received, controlling the locking/releasing device to switch from the locked state to the released state, comprises: controlling the first driving device to be activated and operate and then controlling the locking/releasing device to switch from the locked state to the released state.

14. The sample analysis system of claim 13, wherein controlling the first driving device to be activated and operate and then controlling the locking/releasing device to switch from the locked state to the released state, comprise: controlling the first driving device to be activated and operate for a second preset period to cause a pressure of the liquid-phase fluid flowing toward the chromatographic column to be greater than zero and less than a target pressure value or less than a lower limit value of a target pressure range, and then controlling the locking/releasing device to switch from the locked state to the released state;
the control assembly is further configured to: during performance of a chromatographic analysis test, control the first driving device to drive the liquid-phase fluid to flow at the target pressure value or at a pressure value within the target pressure range, so as to elute the sample solution adsorbed on the chromatographic column; and before performance of a first chromatographic analysis test after startup of the liquid chromatography analyzer, control the first driving device to be activated and operate for a third preset period to cause the pressure of the liquid-phase fluid flowing toward the chromatographic column to reach the target pressure value or the target pressure range; and
the control assembly is further configured to: after the locking/releasing device is controlled to switch from the locked state to the released state, control the first driving device to continue to operate for a fourth preset period to cause the pressure of the liquid-phase fluid flowing toward the chromatographic column to reach substantially the target pressure value or the target pressure range, and then control the directional control valve to switch to the second communication state, such that the liquid-phase fluid supply assembly drives the sample solution in the sample solution preparation channel to be delivered to the chromatographic column by means of the liquid-phase fluid;
wherein a sum of the second preset period and the fourth preset period is less than the third preset period;
preferably, the sum of the second preset period and the fourth preset period is less than half of the third preset period.

15. The sample analysis system of claim 14, wherein the housing is formed with a liquid inlet for the liquid-phase fluid to flow into the liquid chamber and a liquid outlet for the liquid-phase fluid to flow out of the liquid chamber;
after the locking/releasing device is controlled to switch to the locked state and the first driving device is controlled to stop driving the liquid-phase fluid to flow, and before the first driving device is controlled to be activated and the locking/releasing device is controlled to switch from the locked state to the released state, a pressure value of the liquid-phase fluid at the liquid outlet is a first pressure value that is less than the target pressure value or less than the lower limit value of the target pressure range;
after the first driving device is activated and operates for the second preset period, and during the switching of the locking/releasing device from the locked state to the released state, the pressure value of the liquid-phase fluid at the liquid outlet is a second pressure value that is greater than the target pressure value or greater than an upper limit value of the target pressure range; and
after the locking/releasing device switches from the locked state to the released state, the pressure value of the liquid-phase fluid at the liquid outlet is a third pressure value that is substantially equal to the target pressure value or falls within the target pressure range.

16. The sample analysis system of claim 14, wherein after the locking/releasing device is controlled to switch to the locked state and the first driving device is controlled to stop driving the liquid-phase fluid to flow, and before the first driving device is controlled to be activated and the locking/releasing device is controlled to switch from the locked state to the released state, a volume of the liquid chamber is a first volume; after the first driving device is activated and operates for the second preset period, and before the locking/releasing device switches from the locked state to the released state, the volume of the liquid chamber is a second volume; and after the locking/releasing device switches from the locked state to the released state, the volume of the liquid chamber is a third volume, wherein the second volume is greater than the first volume and greater than the third volume; and/or
after the locking/releasing device is controlled to switch to the locked state and the first driving device is controlled to stop driving the liquid-phase fluid to flow, and before the first driving device is controlled to be activated and operate and the locking/releasing device is controlled to switch from the locked state to the released state, the potential energy stored in the energy storage device is first potential energy; after the first driving device is controlled to be activated and operate for the second preset period, and before the locking/releasing device is controlled to switch from the locked state to the released state, the potential energy stored in the energy storage device is second potential energy; and after the locking/releasing device switches from the locked state to the released state, the potential energy stored in the energy storage device is third potential energy, wherein the second potential energy is greater than the first potential energy and greater than the third potential energy.

17. The sample analysis system of any one of claims 1 to 11, wherein the energy storage device has a liquid inlet for inflow of the liquid-phase fluid and a liquid outlet for outflow of the liquid-phase fluid; and
after the locking/releasing device is controlled to switch to the locked state and the first driving device is controlled to stop driving the liquid-phase fluid to flow, and before the first driving device is controlled to be activated and the locking/releasing device is controlled to switch from the locked state to the released state, a pressure value of the liquid-phase fluid at the liquid outlet is a first pressure value,
the first pressure value being substantially zero.

18. The sample analysis system of any one of claims 1 to 11, wherein within the first preset period after completion of the chromatographic analysis test for one blood sample, if no information indicating that a chromatographic analysis test is required for another blood sample is received, controlling the locking/releasing device to switch to the locked state, and controlling the first driving device to stop driving the liquid-phase fluid to flow, comprise:
within the first preset period after completion of the chromatographic analysis test for one blood sample, if no information indicating that a chromatographic analysis test is required for another blood sample is received, first controlling the locking/releasing device to switch to the locked state, and then controlling the first driving device to stop driving the liquid-phase fluid to flow; or
within the first preset period after completion of the chromatographic analysis test for one blood sample, if no information indicating that a chromatographic analysis test is required for another blood sample is received, simultaneously controlling the locking/releasing device to switch to the locked state, and controlling the first driving device to stop driving the liquid-phase fluid to flow; or
within the first preset period after completion of the chromatographic analysis test for one blood sample, if no information indicating that a chromatographic analysis test is required for another blood sample is received, first controlling the first driving device to stop driving the liquid-phase fluid to flow, and then controlling the locking/releasing device to switch to the locked state.

19. The sample analysis system of claim 1, wherein the control assembly is further configured to:
control the sample supply assembly to complete, within a fifth preset period, following sample solution preparation operation: aspirating a blood sample from the sample container and dispensing the blood sample to a first reaction container, and delivering a sample solution prepared from at least the blood sample and a hemolytic agent in the first reaction container to the sample preparation channel via the directional control valve;
when the locking/releasing device is in the locked state, if information indicating that a chromatographic analysis test is required for a blood sample is received, control the liquid-phase fluid supply assembly to complete, within a sixth preset period, following pressure buildup operation: controlling the first driving device to be activated and operate, and controlling the locking/releasing device to switch from the locked state to the released state, such that a pressure at which the liquid-phase fluid supply assembly drives the liquid-phase fluid to flow toward the chromatographic column reaches a target pressure value or a target pressure range within the sixth preset period; and
during performance of a chromatographic analysis test, control the first driving device to drive the liquid-phase fluid to flow at the target pressure value or at a pressure value within the target pressure range, so as to elute the sample solution adsorbed on the chromatographic column;
wherein the sixth preset period is less than the fifth preset period.

20. The sample analysis system of any one of claims 1 to 11 or claim 19, wherein the control assembly is further configured to:
when the locking/releasing device is in the locked state and the directional control valve is in the first communication state, if information indicating that a chromatographic analysis test is required for a blood sample is received, control the sample supply assembly to perform following sample solution preparation operation: aspirating a blood sample from the sample container and dispensing the blood sample to a first reaction container, and delivering a sample solution prepared from at least the blood sample and a hemolytic agent in the first reaction container to the sample preparation channel via the directional control valve;
during performance of the sample solution preparation operation by the sample supply assembly, control the first driving device to be activated and operate, control the locking/releasing device to switch from the locked state to the released state, and control the directional control valve to be maintained in the first communication state; and
after completion of the sample solution preparation operation by the sample supply assembly, control the directional control valve to switch from the first communication state to the second communication state, such that the liquid-phase fluid supply assembly drives the sample solution in the sample solution preparation channel to be delivered to the chromatographic column by means of the liquid-phase fluid.

21. The sample analysis system of any one of claims 1 to 11 or claim 19, wherein the control assembly is further configured to: in the case where the locking/releasing device continuously remains in the locked state for a seventh preset period, if no information indicating that a chromatographic analysis test is required for a blood sample is received, control the locking/releasing device to switch from the locked state to the released state, such that the energy storage device releases the stored potential energy;
wherein the seventh preset period is greater than a period required to complete one chromatographic analysis test and greater than the first preset period.

22. The sample analysis system of claim 21, wherein the seventh preset period is greater than or equal to a period required to complete ten chromatographic analysis tests; and/or
the seventh preset period is greater than or equal to 5 minutes and less than or equal to 2 hours.

23. A sample analysis system, comprising:
a sample input apparatus configured at least to receive a sample container loaded with a blood sample, so as to load the blood sample;
a liquid chromatography analyzer configured to aspirate the blood sample from the sample container and to perform chromatographic analysis on at least part of the aspirated blood sample;
a hematology analyzer configured to aspirate the blood sample from the sample container and to perform hematology analysis on at least part of the aspirated blood sample;
a sample transfer apparatus comprising a first transfer track and a second transfer track, the first transfer track being configured to transfer the sample container from the sample input apparatus to the liquid chromatography analyzer, the second transfer track being configured to transfer the sample container from the sample input apparatus to the hematology analyzer, and the first transfer track and the second transfer track being integrally formed or connected to each other;
an information acquisition apparatus configured to acquire information indicative of a type of test for the blood sample in the sample container; and
a control assembly configured to: determine the type of test for the blood sample in the sample container based on the information fed back by the information acquisition apparatus indicative of the type of test for the blood sample in the sample container; and control, based on the type of test for the blood sample in the sample container, the sample transfer apparatus to transfer the sample container to the liquid chromatography analyzer and/or the hematology analyzer for sample aspiration;
wherein the liquid chromatography analyzer comprises a sample supply assembly, a liquid-phase fluid supply assembly, a directional control valve, a sample solution preparation channel, a chromatographic column, and a detector, the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another, the chromatographic column being connected between the directional control valve and the detector;
the sample supply assembly is configured to aspirate the blood sample from the sample container and supply a sample solution prepared from the at least part of the aspirated blood sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, the energy storage device comprising a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy, and the locking/releasing device being switchable between a locked state and a released state;
the control assembly is further configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for one blood sample, if no information indicating that a chromatographic analysis test is required for another blood sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and
when the locking/releasing device is in the locked state and the directional control valve is in the first communication state, if information indicating that a chromatographic analysis test is required for a blood sample is received, control the sample supply assembly to perform following sample solution preparation operation: aspirating a blood sample from the sample container and dispensing the blood sample to a first reaction container, and delivering a sample solution prepared from at least the blood sample and a hemolytic agent in the first reaction container to the sample preparation channel via the directional control valve;
during performance of the sample solution preparation operation by the sample supply assembly, control the first driving device to be activated and operate, and control the locking/releasing device to switch from the locked state to the released state, such that the potential energy storage and release assembly moves relative to the housing to release the stored potential energy, so as to assist in driving the liquid-phase fluid to flow toward the directional control valve and the chromatographic column; and
after completion of the sample solution preparation operation by the sample supply assembly, control the directional control valve to switch from the first communication state to the second communication state, such that the liquid-phase fluid supply assembly drives the sample solution in the sample solution preparation channel to be delivered to the chromatographic column by means of the liquid-phase fluid.

24. The sample analysis system of claim 23, wherein the control assembly is further configured to: control the sample supply assembly to complete, within a fifth preset period, following sample solution preparation operation: aspirating a blood sample from the sample container and dispensing the blood sample to a first reaction container, and delivering a sample solution prepared from at least the blood sample and a hemolytic agent in the first reaction container to the sample preparation channel via the directional control valve;
when the locking/releasing device is in the locked state, if information indicating that a chromatographic analysis test is required for a blood sample is received, control the liquid-phase fluid supply assembly to complete, within a sixth preset period, following pressure buildup operation: controlling the first driving device to be activated and operate, and controlling the locking/releasing device to switch from the locked state to the released state, such that a pressure at which the liquid-phase fluid supply assembly drives the liquid-phase fluid to flow toward the chromatographic column reaches a target pressure value or a target pressure range within the fifth preset period; and
during performance of a chromatographic analysis test, control the first driving device to drive the liquid-phase fluid to flow at the target pressure value or at a pressure value within the target pressure range, so as to elute the sample solution adsorbed on the chromatographic column;
wherein the sixth preset period is less than the fifth preset period.

25. The sample analysis system of claim 24, wherein the first controller is further configured to: before performance of a first chromatographic analysis test after startup of the liquid chromatography analyzer, control the first driving device to be activated and operate for a third preset period to cause the pressure of the liquid-phase fluid flowing toward the chromatographic column to reach the target pressure value or the target pressure range;
wherein the sixth preset period is less than the third preset period.

26. A liquid chromatography device, comprising a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to analyze the test solution flowing out of the chromatographic column;
the liquid-phase fluid supply assembly comprises a first driving device and an energy storage device, the first driving device being configured to drive the liquid-phase fluid to flow toward the directional control valve and the chromatographic column, and the energy storage device being disposed between the first driving device and the directional control valve and configured to store potential energy or release the stored potential energy; and
the first controller is configured to: during performance of a chromatographic analysis test for a sample, control the first driving device to drive the liquid-phase fluid to flow so as to elute the sample solution adsorbed on the chromatographic column, and control the energy storage device to store potential energy under the pressure of the liquid-phase fluid; and after completion of the chromatographic analysis test for the sample and before performance of a chromatographic analysis for a next sample, control the energy storage device to release the potential energy stored during performance of the chromatographic analysis test for the sample, so as to assist in driving the liquid-phase fluid to flow toward the directional control valve and the chromatographic column.

27. The liquid chromatography device of claim 26, wherein the liquid-phase fluid supply assembly further comprises a locking/releasing device, wherein the locking/releasing device is switchable between a locked state in which the locking/releasing device exerts an acting force on the energy storage device to lock the energy storage device so as to prevent the energy storage device from releasing the stored potential energy, and a released state in which the energy storage device is capable of storing potential energy under the pressure of the liquid-phase fluid and, when the locking/releasing device removes the acting force exerted on the energy storage device, the energy storage device is released, thereby allowing the energy storage device to release the stored potential energy;
controlling the energy storage device to store potential energy under the pressure of the liquid-phase fluid comprises: controlling the locking/releasing device to be in the released state to allow the energy storage device to store potential energy under the pressure of the liquid-phase fluid; and
after completion of the chromatographic analysis test for the sample and before performance of a chromatographic analysis test for a next sample, controlling the energy storage device to release the potential energy stored during performance of the chromatographic analysis test for the sample comprises: after completion of the chromatographic analysis test for the sample, controlling the locking/releasing device to switch from the released state to the locked state so as to prevent the energy storage device from releasing the stored potential energy, and controlling the first driving device to stop driving the liquid-phase fluid to flow; and after the locking/releasing device switches to the locked state, and during performance of the chromatographic analysis test for a next sample, controlling the locking/releasing device to switch from the locked state to the released state, such that the energy storage device releases the potential energy stored during performance of the chromatographic analysis test for the sample.

28. The liquid chromatography device of claim 27, wherein after completion of the chromatographic analysis test for the sample, controlling the locking/releasing device to switch from the released state to the locked state so as to prevent the energy storage device from releasing the stored potential energy, and controlling the first driving device to stop driving the liquid-phase fluid to flow comprise: within a first preset period after completion of the chromatographic analysis test for the sample, if no information indicating that a chromatographic analysis test is required for another sample is received, controlling the locking/releasing device to switch from the released state to the locked state so as to prevent the energy storage device from releasing the stored potential energy, and controlling the first driving device to stop driving the liquid-phase fluid to flow; and
after the locking/releasing device switches to the locked state, and during performance of the chromatographic analysis test for a next sample, controlling the locking/releasing device to switch from the locked state to the released state, such that the energy storage device releases the potential energy stored during performance of the chromatographic analysis test for the sample comprises: after the locking/releasing device switches to the locked state, if information indicating that a chromatographic analysis test is required for a sample is received, controlling the locking/releasing device to switch from the locked state to the released state, such that the energy storage device releases the potential energy stored during performance of the chromatographic analysis test for the sample so as to assist in driving the liquid-phase fluid to flow toward the directional control valve and the chromatographic column.

29. The liquid chromatography device of any one of claims 26 to 28, wherein the liquid chromatography device is a liquid chromatography analyzer, the detector is an ultraviolet detector or a fluorescence detector, and the sample supply assembly comprises a sampling component, a first reaction container and a sample delivery liquid path, the sampling component being configured to aspirate a sample from the sample container and dispense the sample to the first reaction container, and the sample delivery liquid path being configured to dispense a hemolysis solution to the first reaction container and to deliver the sample solution prepared from at least the sample and the hemolysis solution in the first reaction container to the sample solution preparation channel via the directional control valve;
or the liquid chromatography device is a liquid chromatography-mass spectrometry analyzer, the detector is a mass spectrometer detector, the liquid chromatography device further comprises a pretreatment device configured to pre-treat a sample from the sample container by means of at least one of magnetic separation, solid-phase extraction, liquid-liquid extraction, or protein precipitation so as to obtain the sample solution, and the sample supply assembly is configured to transfer at least part of the sample solution treated by the pretreatment device to the sample solution preparation channel.

30. A liquid chromatography device, comprising a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device comprising a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device abuts against the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the liquid-phase fluid to store potential energy and, when the locking/releasing device is disengaged from the potential energy storage and release assembly, the potential energy storage and release assembly is released, thereby allowing the potential energy storage and release assembly to move relative to the housing so as to allow the potential energy storage and release assembly to release the stored potential energy; and
the first controller is configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within the first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

31. The liquid chromatography device of claim 30, wherein the potential energy storage and release assembly has an engagement portion protruding from the housing, the locking/releasing device locks the potential energy storage and release assembly by means of abutting against and restricting the engagement portion, and the locking/releasing device releases the potential energy storage and release assembly by means of disengaging from and releasing the engagement portion; and/or
the locking/releasing device comprises a power component, a locking component, and a transmission component in transmission connection between the power component and the locking component, the transmission component having a self-locking capability, and when the locking/releasing device is in the locked state, the power component being in a stopped state, and the locking component being maintained in the locked position by means of a locking force generated by self-locking of the transmission component so as to abut against and lock the potential energy storage and release assembly.

32. The liquid chromatography device of claim 30 or 31, wherein the first controller is further configured to:
control the sample supply assembly to complete, within a fifth preset period, following sample solution preparation operation: aspirating a sample from the sample container and dispensing the sample to a first reaction container, and delivering a sample solution prepared from at least the sample and a hemolytic agent in the first reaction container to the sample preparation channel via the directional control valve;
when the locking/releasing device is in the locked state, if information indicating that a chromatographic analysis test is required for a sample is received, control the liquid-phase fluid supply assembly to complete, within a sixth preset period, following pressure buildup operation: controlling the first driving device to be activated and operate, and controlling the locking/releasing device to switch from the locked state to the released state, such that a pressure at which the liquid-phase fluid supply assembly drives the liquid-phase fluid to flow toward the chromatographic column reaches a target pressure value or a target pressure range within the fifth preset period; and
during performance of a chromatographic analysis test, control the first driving device to drive the liquid-phase fluid to flow at the target pressure value or at a pressure value within the target pressure range, so as to elute the sample solution adsorbed on the chromatographic column;
wherein the sixth preset period is less than the fifth preset period.

33. A liquid chromatography device, comprising a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device comprising a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device locks the potential energy storage and release assembly in a non-liquid-path-locking manner so as to prevent the potential energy storage and release assembly from moving relative to the housing and thus prevent the potential energy storage and release assembly from releasing the stored potential energy, and a released state in which the potential energy storage and release assembly is capable of moving relative to the housing under the pressure of the liquid-phase fluid to store potential energy, and the locking/releasing device releases the potential energy storage and release assembly in a non-liquid-path-conducting manner to allow the potential energy storage and release assembly to release the stored potential energy;
the first controller is configured to: during performance of a chromatographic analysis test, control the first driving device to drive the liquid-phase fluid to flow so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within the first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow; and after the locking/releasing device switches to the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column.

34. The liquid chromatography device of claim 33, wherein the potential energy storage and release assembly has an engagement portion protruding from the housing, the locking/releasing device locks the potential energy storage and release assembly by means of abutting against and restricting the engagement portion, and the locking/releasing device releases the potential energy storage and release assembly by means of disengaging from and releasing the engagement portion; and/or
the locking/releasing device comprises a power component, a locking component, and a transmission component in transmission connection between the power component and the locking component, the transmission component having a self-locking capability, and when the locking/releasing device is in the locked state, the power component being in a stopped state, and the locking component being maintained in the locked position by means of a locking force generated by self-locking of the transmission component so as to abut against and lock the potential energy storage and release assembly.

35. A liquid chromatography device, comprising a sample supply assembly, a liquid-phase fluid supply assembly, a directional control valve, a sample solution preparation channel, a chromatographic column, a detector, and a first controller, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device comprising a housing and a potential energy storage and release assembly that is at least partially disposed within the housing and that partitions an interior of the housing to form a liquid chamber through which the liquid-phase fluid flows, the housing being formed with a liquid inlet for the liquid-phase fluid to flow into the liquid chamber and a liquid outlet for the liquid-phase fluid to flow out of the liquid chamber, and the potential energy storage and release assembly being at least partially movable relative to the housing to change a volume of the liquid chamber and to store potential energy or release the stored potential energy;
the locking/releasing device is switchable between a locked state in which the locking/releasing device prevents the potential energy storage and release assembly from releasing the stored potential energy, and a released state in which the locking/releasing device allows the potential energy storage and release assembly to store potential energy and release the stored potential energy; and
the first controller is configured to: during performance of a chromatographic analysis test, control the first driving device to drive the liquid-phase fluid to flow at a target pressure value or at a pressure value within a target pressure range, so as to elute the sample solution adsorbed on the chromatographic column, and control the locking/releasing device to be in the released state to allow the potential energy storage and release assembly to move relative to the housing under the pressure of the liquid-phase fluid, so as to store potential energy; within a first preset period after completion of the chromatographic analysis test for a sample, if no information indicating that a chromatographic analysis test is required for another sample is received, control the locking/releasing device to switch from the released state to the locked state so as to prevent the potential energy storage and release assembly from moving relative to the housing and thus prevent the potential energy storage and release assembly from releasing the stored potential energy, and control the first driving device to stop driving the liquid-phase fluid to flow to maintain a pressure of the liquid-phase fluid at the liquid outlet at a first pressure value; and when the locking/releasing device is in the locked state, if information indicating that a chromatographic analysis test is required for a sample is received, control the locking/releasing device to switch from the locked state to the released state to enable the potential energy storage and release assembly to move relative to the housing to release the stored potential energy, so as to assist in driving the liquid-phase fluid to flow toward the directional control valve and the chromatographic column;
wherein the first pressure value is substantially equal to the target pressure value or is within the target pressure range, or the first pressure value is substantially equal to zero.

36. The liquid chromatography device of claim 35, wherein if information indicating that a chromatographic analysis test is required for a sample is received, controlling the locking/releasing device to switch from the locked state to the released state, comprises: controlling the first driving device to be activated and operate for a second preset period to cause a pressure of the fluid flowing toward the chromatographic column to reach the target pressure value or the target pressure range, and then controlling the locking/releasing device to switch from the locked state to the released state;
after the first driving device is activated and operates for the second preset period, and during the process of switching the locking/releasing device from the locked state to the released state, the pressure value of the liquid-phase fluid at the liquid outlet is a second pressure value that is greater than the target pressure value or greater than an upper limit value of the target pressure range; and
after the locking/releasing device switches from the locked state to the released state, the pressure value of the liquid-phase fluid at the liquid outlet is a third pressure value that is substantially equal to the target pressure value or falls within the target pressure range.

37. The liquid chromatography device of claim 36, wherein the first controller is further configured to: after the locking/releasing device is controlled to switch from the locked state to the released state, control the first driving device to continue to operate for a fourth preset period to cause the pressure of the liquid-phase fluid flowing toward the chromatographic column to reach substantially the target pressure value or the target pressure range, and then control the directional control valve to switch to the second communication state, such that the liquid-phase fluid supply assembly drives the sample solution in the sample solution preparation channel to be delivered to the chromatographic column by means of the liquid-phase fluid;
wherein a sum of the second preset period and the fourth preset period is less than the third preset period.

38. The liquid chromatography device of any one of claims 35 to 37, wherein the locking/releasing device comprise a two-way valve connected between the energy storage device and the directional control valve;
the locking/releasing device being in the locked state refers to the two-way valve being in a closed state;
the locking/releasing device being in the released state refers to the two-way valve being in an open state; and
the first pressure value is substantially equal to the target pressure value or is within the target pressure range;
preferably, the first pressure value is greater than or equal to 2 MPa and less than or equal to 10 MPa; and
more preferably, the first pressure value is greater than or equal to 4 MPa and less than or equal to 6 MPa.

39. A liquid chromatography device, comprising a sample supply assembly, a liquid-phase fluid supply assembly, a directional control valve, a sample solution preparation channel, a chromatographic column, a detector, and a first controller, the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another, the chromatographic column being connected between the directional control valve and the detector;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, a second driving device, and an energy storage device, the first driving device being connected between the liquid-phase fluid container and the energy storage device, the first driving device being configured to drive the liquid-phase fluid to flow toward the directional control valve and the chromatographic column, the energy storage device being configured to store potential energy when the first driving device drives the liquid-phase fluid to flow, the second driving device being connected to the liquid-phase fluid container and/or the energy storage device, and the second driving device being configured to aspirate the liquid-phase fluid for storage and to use the stored liquid-phase fluid to assist in driving the liquid-phase fluid to flow toward the directional control valve and the chromatographic column; and
the first controller is configured to: during performance of a chromatographic analysis test, control the first driving device to drive the liquid-phase fluid to flow so as to elute the sample solution adsorbed on the chromatographic column; within the first preset period after completion of the chromatographic analysis test for a sample, if no information indicating that a chromatographic analysis test is required for another sample is received, control the second driving device to be activated and operate to aspirate the liquid-phase fluid and store the liquid-phase fluid in the second driving device, and control the first driving device to stop driving the liquid-phase fluid to flow; and after the second driving device stores the liquid-phase fluid, if information indicating that a chromatographic analysis test is required for a sample is received, control the first driving device to be activated and operate to drive the liquid-phase fluid to flow toward the directional control valve and the chromatographic column, and control the second driving device to be activated and operate to assist in driving the liquid-phase fluid to flow toward the directional control valve and the chromatographic column by means of the stored liquid-phase fluid.

40. The liquid chromatography device of claim 39, wherein the second driving device is connected to the energy storage device, and the second driving device being activated and operating to aspirate the liquid-phase fluid and store the liquid-phase fluid in the second driving device comprises the second driving device being activated and operating to aspirate the liquid-phase fluid from the energy storage device and store the liquid-phase fluid in the second driving device; or
the second driving device is connected between the liquid-phase fluid container and the energy storage device, and the second driving device being activated and operating to aspirate the liquid-phase fluid and store the liquid-phase fluid in the second driving device comprises the second driving device being activated and operating to aspirate the liquid-phase fluid from the liquid-phase fluid container and store the liquid-phase fluid in the second driving device.

41. A liquid chromatography device, comprising a sample supply assembly, a liquid-phase fluid supply assembly, a directional control valve, a sample solution preparation channel, a chromatographic column, and a detector, the chromatographic column being connected between the directional control valve and the detector, and the directional control valve being switchable between a first communication state in which the directional control valve places the sample supply assembly in communication with the sample solution preparation channel and places the liquid-phase fluid supply assembly in communication with the chromatographic column, and a second communication state in which the directional control valve places the liquid-phase fluid supply assembly, the sample solution preparation channel and the chromatographic column in communication with one another;
wherein the sample supply assembly is configured to supply a sample solution prepared from at least a sample to the sample solution preparation channel via the directional control valve;
the liquid-phase fluid supply assembly is configured to drive the sample solution in the sample solution preparation channel to be delivered to the chromatographic column by means of a liquid-phase fluid and to drive the liquid-phase fluid to sequentially flow through the directional control valve and the chromatographic column;
the chromatographic column is configured to adsorb the sample solution and to enable the liquid-phase fluid to elute the sample solution to form a test solution;
the detector is configured to perform chromatographic analysis on the test solution flowing out of the chromatographic column;
the liquid-phase fluid supply assembly comprises a first driving device, an energy storage device, and a locking/releasing device, the first driving device being configured to drive the liquid-phase fluid to flow toward the directional control valve and the chromatographic column, the energy storage device being disposed between the first driving device and the directional control valve, and the energy storage device comprising a housing and a potential energy storage and release assembly that is at least partially disposed within the housing and that partitions an interior of the housing to form a liquid chamber through which the liquid-phase fluid flows, the potential energy storage and release assembly being at least partially movable relative to the housing to change a volume of the liquid chamber and to store potential energy or release the stored potential energy;
the locking/releasing device is switchable between a locked state in which the locking/releasing device exerts an acting force on the potential energy storage and release assembly to lock the potential energy storage and release assembly, so as to prevent the potential energy storage and release assembly from moving relative to the housing and thus prevent the potential energy storage and release assembly from releasing the stored potential energy, and a released state in which the potential energy storage and release assembly is capable of moving relative to the housing under a pressure of the fluid to store potential energy and, when the locking/releasing device removes the acting force exerted on the potential energy storage and release assembly, the potential energy storage and release assembly is released, thereby allowing the potential energy storage and release assembly to move relative to the housing to allow the potential energy storage and release assembly to release the stored potential energy.

42. The liquid chromatography device of claim 41, wherein the locking/releasing device exerts the acting force on the potential energy storage and release assembly by means of abutting against the potential energy storage and release assembly, so as to lock the potential energy storage and release assembly, and the locking/releasing device removes the acting force exerted on the potential energy storage and release assembly by means of disengaging from the potential energy storage and release assembly, so as to release the potential energy storage and release assembly; and/or
the locking/releasing device exerts the acting force on the potential energy storage and release assembly to lock the potential energy storage and release assembly in a non-liquid-path-locking manner, and the locking/releasing device removes the acting force exerted on the potential energy storage and release assembly to release the potential energy storage and release assembly in a non-liquid-path-conducting manner.

43. A sample analysis system, comprising:
a sample input apparatus configured at least to receive a sample container loaded with a sample, so as to load the sample;
a first analyzer that is a liquid chromatography device of any one of claims 26 to 42 configured to aspirate the sample from the sample container and to perform chromatographic analysis on at least part of the aspirated sample;
a second analyzer configured to aspirate the sample from the sample container and to analyze at least part of the aspirated sample, a test performed by the second analyzer on the sample being different from a test performed by the first analyzer on the sample;
a sample transfer apparatus comprising a first transfer track and a second transfer track, the first transfer track being configured to transfer the sample container from the sample input apparatus to the liquid chromatography device, the second transfer track being configured to transfer the sample container from the sample input apparatus to the cell analyzer, and the first transfer track and the second transfer track being integrally formed or connected to each other; and
a control assembly configured to: control, based on the type of test for the sample in the sample container, the sample transfer apparatus to transfer the sample container to the first analyzer and/or the second analyzer for sample aspiration.

44. The sample analysis system of claim 43, wherein the second analyzer is a hematology analyzer configured at least to aspirate the sample from the sample container and to perform hematology analysis on at least part of the aspirated sample;
and/or the sample analysis system further comprises an information acquisition apparatus configured to acquire information indicative of the type of test for the sample in the sample container; and the control assembly is configured to: determine the type of test for the sample in the sample container based on the information fed back by the information acquisition apparatus indicative of the type of test for the sample in the sample container; and control, based on the type of test for the sample in the sample container, the sample transfer apparatus to transfer the sample container to the first analyzer and/or the second analyzer for sample aspiration.

45. A control method for a liquid chromatography device, the control method comprising the steps of:
within a first preset period after completion of a chromatographic analysis test for one blood sample, if no information indicating that a chromatographic analysis test is required for another blood sample is received, controlling a locking/releasing device to switch from a released state to a locked state so as to prevent a potential energy storage and release assembly from releasing the stored potential energy, and controlling a first driving device to stop driving a liquid-phase fluid to flow; and
after the locking/releasing device switches to the locked state, if information indicating that a chromatographic analysis test is required for a blood sample is received, controlling the locking/releasing device to switch from the locked state to the released state, such that the potential energy storage and release assembly releases the stored potential energy so as to assist in driving the liquid-phase fluid to flow toward a chromatographic column.

46. The control method for the liquid chromatography device of claim 45, the control method further comprising: before performance of a first chromatographic analysis test after startup of the liquid chromatography device, controlling the first driving device to be activated and operate for a third preset period to cause a pressure of the liquid-phase fluid flowing toward the chromatographic column to reach a target pressure value or a target pressure range; and during performance of a chromatographic analysis test, control the first driving device to drive the liquid-phase fluid to flow at the target pressure value or at a pressure value within the target pressure range, so as to elute the sample solution adsorbed on the chromatographic column; and
if information indicating that a chromatographic analysis test is required for a blood sample is received, controlling the locking/releasing device to switch from the locked state to the released state, comprises: controlling the first driving device to be activated and operate for a second preset period to cause a pressure of the liquid-phase fluid flowing toward the chromatographic column to be greater than zero and less than the target pressure value or less than a lower limit value of the target pressure range, and then controlling the locking/releasing device to switch from the locked state to the released state; and
the control method further comprising: after the locking/releasing device is controlled to switch from the locked state to the released state, controlling the first driving device to continue to operate for a fourth preset period to cause the pressure of the liquid-phase fluid flowing toward the chromatographic column substantially to reach the target pressure value or the target pressure range, and then controlling the directional control valve to switch to a state in which the liquid-phase fluid supply assembly, the sample solution preparation channel and the chromatographic column are in communication with one another, such that the liquid-phase fluid supply assembly drives the sample solution in the sample solution preparation channel to be delivered to the chromatographic column by means of the liquid-phase fluid;
wherein a sum of the second preset period and the fourth preset period is less than the third preset period.

47. A control method for a liquid chromatography device, the control method comprising the steps of:
during performance of a chromatographic analysis test for a sample, controlling a first driving device to drive a liquid-phase fluid to flow so as to elute a sample solution adsorbed on the chromatographic column and prepared from at least the sample, and controlling an energy storage device to store potential energy under a pressure of the liquid-phase fluid; and
after completion of the chromatographic analysis test for the sample and before performance of a chromatographic analysis for a next sample, control the energy storage device to release the potential energy stored during performance of the chromatographic analysis test for the sample, so as to assist in driving the liquid-phase fluid to flow toward the directional control valve and the chromatographic column.

48. The control method for the liquid chromatography device of claim 47, controlling the energy storage device to store potential energy under the pressure of the liquid-phase fluid comprises: controlling a locking/releasing device to be in a released state to allow the energy storage device to store potential energy under the pressure of the liquid-phase fluid;
after completion of the chromatographic analysis test for the sample and before performance of a chromatographic analysis test for a next sample, controlling the energy storage device to release the potential energy stored during performance of the chromatographic analysis test for the sample comprises: after completion of the chromatographic analysis test for the sample, controlling the locking/releasing device to switch from the released state to the locked state so as to prevent the energy storage device from releasing the stored potential energy, and controlling the first driving device to stop driving the liquid-phase fluid to flow; and after the locking/releasing device switches to the locked state, and during performance of the chromatographic analysis test for a next sample, controlling the locking/releasing device to switch from the locked state to the released state, such that the energy storage device releases the potential energy stored during performance of the chromatographic analysis test for the sample.
